# EUROPEAN PATENT SPECIFICATION

(11) **EP 3 948 706 B1**
(45) Date of publication and mention of the grant of the patent: **19.02.2025**
(21) Application number: 19723138.4
(22) Date of filing: 15.05.2019
(51) Int. Cl.: G06N 20/20, G06N 3/04, G06N 20/10

(54) **TECHNIQUE FOR FACILITATING USE OF MACHINE LEARNING MODELS**
TECHNIK ZUR ERLEICHTERUNG DER BENUTZUNG VON MASCHINENLERNMODELLEN
TECHNIQUE POUR FACILITER L'UTILISATION DE MODÈLES D'APPRENTISSAGE AUTOMATIQUE

(30) Priority: 03.04.2019 EP 19382246
(43) Date of publication of application: 09.02.2022
(73) Proprietor: TELEFONAKTIEBOLAGET LM ERICSSON (PUBL), 164 83 Stockholm (SE)
(72) Inventor: PUENTE PESTAÑA, Miguel Angel, 28007 Madrid (ES)
(74) Representative: Ericsson
(86) International application number: PCT/EP2019/062462
(87) International publication number: WO 2020/200487

(56) References cited:
- EP-A2- 3 101 599
- WO-A1-2019/032968
- US-A1- 2018 276 553
- ANONYMOUS: "3GPP TS 23.501 version 15.2.0 Release 15", 1 June 2018 (2018-06-01), XP093104774, Retrieved from the Internet <URL:https://www.etsi.org/deliver/etsi_ts/123500_123599/123501/15.02.00_60/ts_123501v150200p.pdf> [retrieved on 20231123]
- ANONYMOUS: "Intent NBI -Definition and Principles ONF TR-523", 1 October 2016 (2016-10-01), XP093104787, Retrieved from the Internet <URL:https://opennetworking.org/wp-content/uploads/2014/10/TR-523_Intent_Definition_Principles.pdf> [retrieved on 20231123]
- ANONYMOUS: "Homing and Allocation Service (HAS)", 1 September 2018 (2018-09-01), XP093104812, Retrieved from the Internet <URL:https://wiki.onap.org/pages/viewpage.action?pageId=16005528> [retrieved on 20231123]
- ANONYMOUS: "Network Functions Virtualisation (NFV) Release 2; Management and Orchestration", 1 August 2017 (2017-08-01), XP093104836, Retrieved from the Internet <URL:https://www.etsi.org/deliver/etsi_gs/nfv-ifa/001_099/014/02.03.01_60/gs_nfv-ifa014v020301p.pdf> [retrieved on 20231123]
- ANONYMOUS: "3GPP TS 28.554", 1 December 2018 (2018-12-01), XP093104972, Retrieved from the Internet <URL:https://www.3gpp.org/ftp/Specs/archive/28_series/28.554/> [retrieved on 20231123]
- ANONYMOUS: "Focus Group on Machine Learning for Future Networks including 5G", 5 March 2019 (2019-03-05), XP093157591, Retrieved from the Internet <URL:https://web.archive.org/web/20190305124838/https://www.itu.int/en/ITU-T/focusgroups/ml5g/Pages/default.aspx>
- "Focus group on Machine Learning for Future Networks including 5G (FG-ML5G) FG-ML5G-ARC5G Unified architecture for machine learning in 5G and future networks;ML5G-O-015", vol. ML5G, 5 February 2019 (2019-02-05), pages 1 - 32, XP044262890, Retrieved from the Internet <URL:https://extranet.itu.int/sites/itu-t/focusgroups/ML5G/output/ML5G-O-015.zip/ML5G-O-015_att.pdf> [retrieved on 20190205]

## Description

### Technical Field

The present disclosure generally relates to the field of machine learning. In particular, a technique for facilitating use of machine learning models in a system comprising a plurality of machine learning model providers is presented. The technique may be embodied in methods, computer programs, apparatuses and systems.

### Background

Mobile communication systems of the fifth generation (5G) generally make use of the so-called Service Based Architecture (SBA) in which, rather than using the traditional peer-to-peer interfaces and protocols, each Network Function (NF) may provide - as a "producer" - one or more "services" to one or more "consumers". One such producer is the so-called Network Data Analytics Function (NWDAF), which is introduced in 5G systems as a new NF that collects data and provides analytics (e.g., models or patterns) to other NFs, wherein these analytics can be the results of machine learning algorithms executed in the NWDAF. In other words, the NWDAF is assumed to be the NF that hosts the machine learning processes in the mobile communication network for optimization and automation purposes.

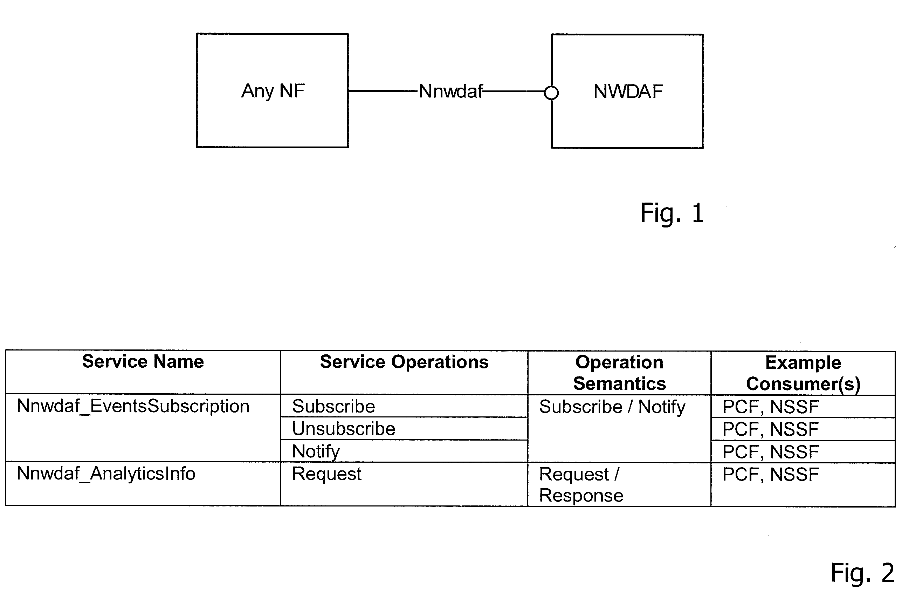

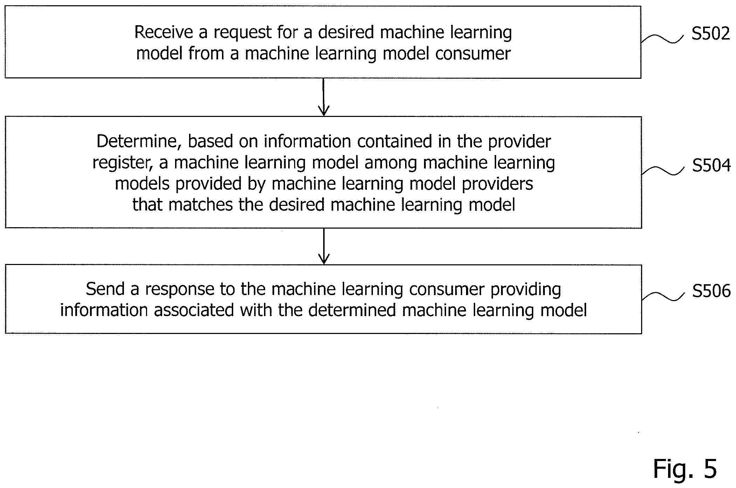

As shown in Figure 1, 5G systems allow any NF to request network analytics information from the NWDAF, wherein the Nnwdaf interface is defined for the consumer NFs (e.g., Policy Control Function (PCF), Network Slice Selection Function (NSSF), etc.) to request subscription to network analytics delivery, to cancel subscription to network analytics delivery, and to request a specific report of network analytics for a particular context. An overview of the service operations supported by the NWDAF via the Nnwdaf interface in accordance with the 3GPP specifications is shown in Figure 2.

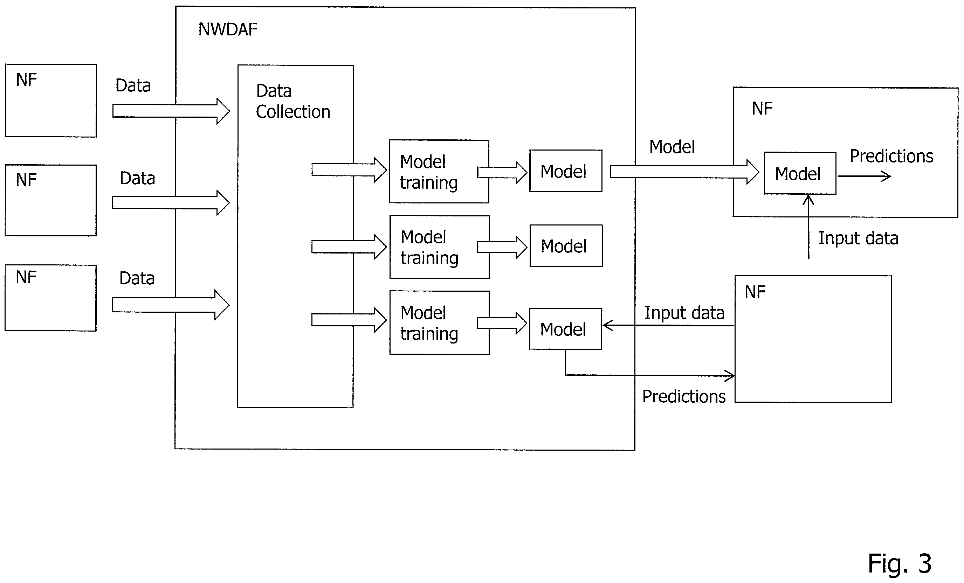

Figure 3 illustrates an overview of the process of generating machine learning models (e.g., neural networks, support vector machines, etc.) from stored data and providing the models to other NFs by the NWDAF. As shown in the figure, the NWDAF may collect data from a set of NFs and may generate models in a model training phase, wherein the models can then be employed to make predictions based on input data. In one variant, a generated model may be provided to a consumer NF, where it may be employed to make predictions from input data locally. In another variant, the consumer NF may employ the model in a request/response scheme with the NWDAF, wherein the NF provides input data to the NWDAF which uses the model to make predictions and returns the prediction results to the consumer NF. Once trained, each model has particular characteristics, e.g., a certain model accuracy, error statistics, ratio of false positives, etc.

In 5G systems, different NWDAF instances may generally exist in the operator's network and each of them may provide a different set of models for different analytics. In some cases, different NWDAF instances may provide models for the same analytics, but the models may have different characteristics. In order to use a model provided by an NWDAF instance, the consumer NF currently needs follow the discovery mechanisms provided by the Network Repository Function (NRF) to discover the proper NWDAF instance. The use of these discovery mechanisms may be cumbersome, however, and it may thus not be easy for a consumer NF to identify the most appropriate model and NWDAF instance for a desired analytics scenario.

US 2018/0276553 A1 relates to machine learning and statistical models. A system is configured to receive a user statement comprising a request for information and identify an intent type and one or more parameters based on the user statement. The system selects a model from the model registry based on the intent type and the one or more parameters, obtains a result based on invoking the selected model using the one or more parameters, and provides the result to the user.

Document "Focus group on Machine Learning for Future Networks including 5G (FG-ML5G) FG-ML5G-ARC5G Unified architecture for machine learning in 5G and future networks; ML5G-O-015", ITU-T draft, vol. ML5G, 5 February 2019, pages 1-32, defines a unified architecture for Machine Learning in Fifth Generation and future networks.

### Summary

Accordingly, there is a need for a technique for facilitating use of machine learning models that avoids one or more of these problems, or other problems.

According to the present disclosure, a method performed by a broker component, a method performed by a machine learning model consumer, a method performed by a machine learning model provider, and corresponding computing units as well as a computer program product according to the independent claims are provided. Developments are set forth in the dependent claims.

According to a first aspect, a method for facilitating use of machine learning models in a system comprising a plurality of machine learning model providers is provided. The method is performed by a broker component maintaining a provider register containing information about the plurality of machine learning model providers and machine learning models provided by the plurality of machine learning model providers. The method comprises receiving a request for a desired machine learning model from a machine learning model consumer, determining, based on the information contained in the provider register, a machine learning model among the machine learning models provided by the machine learning model providers that matches the desired machine learning model, and sending a response to the machine learning model consumer providing information associated with the determined machine learning model.

The request includes information characterizing the desired machine learning model, wherein determining the machine learning model that matches the desired machine learning model includes matching the information characterizing the desired machine learning model with the information contained in the provider register. The information characterizing the desired machine learning model may include at least one of an expected output parameter provided by the desired machine learning model, one or more expected input parameters required by the desired machine learning model, an expected type of the desired machine learning model, and one or more evaluation metric based conditions indicative of output characteristics expected to be supported by the desired machine learning model. The information contained in the provider register may include, for each machine learning model provided by one of the plurality of machine learning model providers, at least one of an output parameter provided by the respective machine learning model, one or more input parameters required by the respective machine learning model, a type of the respective machine learning model, and one or more evaluation metric values indicative of output characteristics supported by the respective machine learning model. The information contained in the provider register may include access information for each of the plurality of machine learning model providers. The method may further comprise receiving, prior to receiving the request for the desired machine learning model, a registration message from each of the plurality of machine learning model providers to register its machine learning models with the provider register.

In one variant, the request may be a request to obtain the desired machine learning model for use at the machine learning model consumer. In this case, the information associated with the determined machine learning model provided in the response to the machine learning model consumer may include the determined machine learning model. The method may further comprise sending a request for the determined machine learning model to the machine learning model provider providing the determined machine learning model, and receiving the determined machine learning model from the machine learning model provider providing the determined machine learning model in response to the request.

In another variant, the request may be a request to subscribe for obtaining the desired machine learning model for use at the machine learning model consumer. In this case, the information associated with the determined machine learning model provided in the response to the machine learning model consumer may include a notification on the availability of the determined machine learning model and, optionally, the determined machine learning model. The response including the notification may be sent to the machine learning model consumer conditionally when the determined machine learning model matches the desired machine learning model better than a machine learning model previously sent to the machine learning model consumer as matching the desired machine learning model. The method may further comprise receiving, upon receiving the request for the desired machine learning model, a registration message from a machine learning model provider to register its machine learning models with the provider register, wherein determining the machine learning model that matches the desired machine learning model may include checking the machine learning models registered by the registration message on a match with the desired machine learning model, if a match with the desired machine learning model is determined, sending a request for the determined machine learning model to the machine learning model provider providing the determined machine learning model, and receiving the determined machine learning model from the machine learning model provider providing the determined machine learning model in response to the request.

In a further variant, the request may be a request to use the desired machine learning model, wherein the request may include one or more input values to be passed as input to the desired machine learning model. In this case, the information associated with the determined machine learning model provided in the response to the machine learning model consumer may include an output value output by the determined machine learning model in response to the one or more input values. The method may further comprise sending the one or more input values to the machine learning model provider providing the determined machine learning model as input to the desired machine learning model, and receiving an output value output by the determined machine learning model from the machine learning model provider providing the determined machine learning model in response to the one or more input values.

In a still further variant, the request may be a request to obtain access information to a machine learning model provider providing a machine learning model that matches the desired machine learning model. In this case, the information associated with the determined machine learning model provided in the response to the machine learning model consumer may include access information to the machine learning model provider providing the determined machine learning model.

The system is a mobile communication system, wherein at least one of the plurality of machine learning model providers is an NWDAF of the mobile communication system. Also, the system may be a mobile communication system and the broker component is discoverable by at least one of the machine learning model consumer and the plurality of machine learning model providers via an NRF of the mobile communication system.

According to a second aspect, a method for facilitating use of machine learning models in a system comprising a plurality of machine learning model providers is provided. The method is performed by a machine learning model consumer and comprises sending a request for a desired machine learning model to a broker component maintaining a provider register including information about the plurality of machine learning model providers and machine learning models provided by the plurality of machine learning model providers, and receiving a response from the broker component providing information associated with a machine learning model determined by the broker component among the machine learning models provided by the machine learning model providers as matching the desired machine learning model.

The method according to the second aspect defines a method from a machine learning model consumer's perspective which may be complementary to the method according to the first aspect. As in the method of the first aspect, the request includes information characterizing the desired machine learning model. The information characterizing the desired machine learning model may include at least one of an expected output parameter provided by the desired machine learning model, one or more expected input parameters required by the desired machine learning model, an expected type of the desired machine learning model, and one or more evaluation metric based conditions indicative of output characteristics expected to be supported by the desired machine learning model.

In one variant, the request may be a request to obtain the desired machine learning model for use at the machine learning model consumer. In this case, the information associated with the determined machine learning model provided in the response from the broker component may include the determined machine learning model. In another variant, the request may be a request to subscribe for obtaining the desired machine learning model for use at the machine learning model consumer. In this case, the information associated with the determined machine learning model provided in the response from the broker component may include a notification on the availability of the determined machine learning model and, optionally, the determined machine learning model. In a further variant, the request may be a request to use the desired machine learning model, wherein the request may include one or more input values to be passed as input to the desired machine learning model. In this case, the information associated with the determined machine learning model provided in the response from the broker component may include an output value output by the determined machine learning model in response to the one or more input values.

In a still further variant, the request may be a request to obtain access information to a machine learning model provider providing a machine learning model that matches the desired machine learning model. In this case, the information associated with the determined machine learning model provided in the response from the broker component may include includes access information to the machine learning model provider providing the determined machine learning model. In one particular such variant, the method may further comprise sending, using the access information, a request for the determined machine learning model to the machine learning model provider providing the determined machine learning model, and receiving the determined machine learning model from the machine learning model provider providing the determined machine learning model in response to the request. In another particular such variant, the method may further comprise sending, to the machine learning model provider providing the determined machine learning model using the access information, a request to subscribe for obtaining the determined machine learning model for use at the machine learning model consumer, and receiving, from the machine learning model provider providing the determined machine learning model, a notification on the availability of the determined machine learning model and, optionally, the determined machine learning model. In a further particular such variant, the method may further comprise sending, to the machine learning model provider providing the determined machine learning model using the access information, a request to use the desired machine learning model, wherein the request may include one or more input values to be passed as input to the desired machine learning model, and receiving, from the machine learning model provider providing the determined machine learning model, an output value output by the determined machine learning model in response to the one or more input values.

The system is a mobile communication system, wherein at least one of the plurality of machine learning model providers is an NWDAF of the mobile communication system. Also, the system may be a mobile communication system and the broker component is discoverable by at least one of the machine learning model consumer and the plurality of machine learning model providers via an NRF of the mobile communication system.

According to a third aspect, a method for facilitating use of machine learning models in a system comprising a plurality of machine learning model providers is provided. The method is performed by a machine learning model provider of the plurality of machine learning model providers and comprises sending, to a broker component maintaining a provider register including information about the plurality of machine learning model providers and machine learning models provided by the plurality of machine learning model providers, the provider register enabling the broker component to determine a machine learning model among the machine learning models provided by the plurality of machine learning model providers that matches a desired machine learning model requested by a machine learning model consumer, a registration message to register machine learning models provided by the machine learning model provider with the provider register of the broker component.

The method according to the third aspect defines a method from a machine learning model provider's perspective which may be complementary to the method according to the first aspect. The registration message may include, for each machine learning model provided by the machine learning model provider, at least one of an output parameter provided by the respective machine learning model, one or more input parameters required by the respective machine learning model, a type of the respective machine learning model, and one or more evaluation metric values indicative of output characteristics supported by the respective machine learning model. The registration message may include access information for the machine learning model provider.

The system is a mobile communication system, wherein the machine learning model provider is an NWDAF of the mobile communication system. Also, the system may be a mobile communication system and the broker component is discoverable by at least one of the machine learning model consumer and the plurality of machine learning model providers via an NRF of the mobile communication system.

According to a fourth aspect, a computer program product is provided. The computer program product comprises program code portions for performing the method of at least one of the first, the second and the third aspect when the computer program product is executed on one or more computing devices (e.g., a processor or a distributed set of processors). The computer program product may be stored on a computer readable recording medium, such as a semiconductor memory, DVD, CD-ROM, and so on.

According to a fifth aspect, a computing unit configured to execute a broker component for facilitating use of machine learning models in a system comprising a plurality of machine learning model providers is provided. The broker component maintains a provider register including information about the plurality of machine learning model providers and machine learning models provided by the plurality of machine learning model providers. The computing unit comprises at least one processor and at least one memory, the at least one memory containing instructions executable by the at least one processor such that the broker component is operable to perform any of the method steps presented herein with respect to the first aspect.

According to a sixth aspect, a computing unit configured to execute a machine learning model consumer for facilitating use of machine learning models in a system comprising a plurality of machine learning model providers is provided. The computing unit comprises at least one processor and at least one memory, the at least one memory containing instructions executable by the at least one processor such that the machine learning model consumer is operable to perform any of the method steps presented herein with respect to the second aspect.

According to a seventh aspect, a computing unit configured to execute a machine learning model provider for facilitating use of machine learning models in a system comprising a plurality of machine learning model providers is provided, wherein the machine learning model provider is one of the plurality of machine learning model providers. The computing unit comprises at least one processor and at least one memory, the at least one memory containing instructions executable by the at least one processor such that the machine learning model provider is operable to perform any of the method steps presented herein with respect to the third aspect.

According to an eighth aspect, there is provided a system comprising a computing unit of the fifth aspect, a computing unit of the sixth aspect, and at least one computing unit of the seventh aspect.

### Brief Description of the Drawings

Implementations of the technique presented herein are described herein below with reference to the accompanying drawings, in which:
- Fig. 1: illustrates the Nnwdaf interface via which any NF may request analytics from an NWDAF;
- Fig. 2: illustrates an overview of service operations supported by the NWDAF;
- Fig. 3: illustrates an overview of the process of generating machine learning models and providing them to consumer NFs by the NWDAF;
- Figs. 4a to 4c: illustrate exemplary compositions of a computing unit configured to execute a broker component, a computing unit configured to execute a machine learning model consumer, and a computing unit configured to execute a machine learning model provider according to the present disclosure;
- Fig. 5: illustrates a method which may be performed by the broker component according to the present disclosure;
- Fig. 6: illustrates a method which may be performed by the machine learning model consumer according to the present disclosure;
- Fig. 7: illustrates a method which may be performed by the machine learning model provider according to the present disclosure;
- Fig. 8: illustrates a signaling diagram of an exemplary process in which a machine learning model provider registers with the broker component according to the present disclosure;
- Fig. 9: illustrates a signaling diagram of an exemplary process in which a machine learning model consumer obtains a desired machine learning model for use at the machine learning model consumer according to the present disclosure;
- Fig. 10: illustrates a signaling diagram of an exemplary process in which a machine learning model consumer subscribes for obtaining a desired machine learning model for use at the machine learning model consumer according to the present disclosure;
- Fig. 11: illustrates a signaling diagram of an exemplary process in which a machine learning model consumer uses a desired machine learning model via the broker component according to the present disclosure;
- Figs. 12a and 12b: illustrate a signaling diagram of an exemplary process in which a machine learning model consumer obtains access information to a machine learning model provider via the broker component to obtain or use a desired machine learning model directly from the machine learning model provider; and
- Fig. 13: illustrates a signaling diagram of an exemplary process in which the broker component registers with an NRF so that the broker component is discoverable by machine learning model consumers and providers according to the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

Those skilled in the art will further appreciate that the steps, services and functions explained herein below may be implemented using individual hardware circuitry, using software functioning in conjunction with a programmed micro-processor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

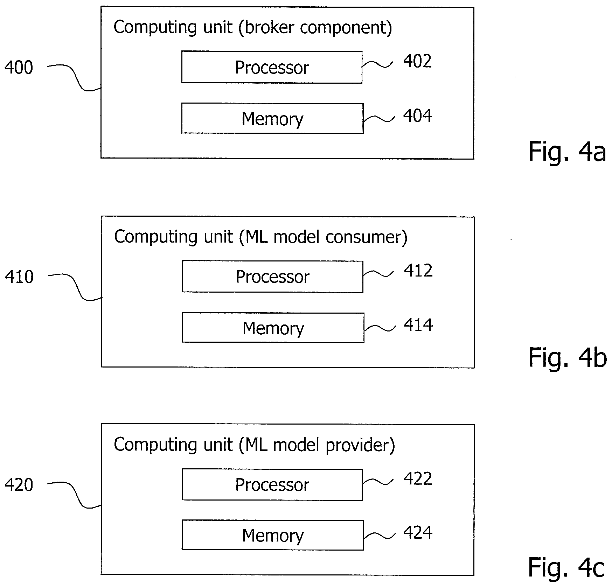

Figure 4a schematically illustrates an exemplary composition of a computing unit 400 configured to execute a broker component for facilitating use of machine learning models in a system comprising a plurality of machine learning model providers, wherein the broker component maintains a provider register including information about the plurality of machine learning model providers and machine learning models provided by the plurality of machine learning model providers. The computing unit 400 comprises at least one processor 402 and at least one memory 404, wherein the at least one memory 404 contains instructions executable by the at least one processor 402 such that the broker component is operable to carry out the method steps described herein below with reference to the broker component.

Figure 4b schematically illustrates an exemplary composition of a computing unit 410 configured to execute a machine learning model consumer for facilitating use of machine learning models in a system comprising a plurality of machine learning model providers. The computing unit 410 comprises at least one processor 412 and at least one memory 414, wherein the at least one memory 414 contains instructions executable by the at least one processor 412 such that the machine learning model consumer is operable to carry out the method steps described herein below with reference to the machine learning model consumer.

Figure 4c schematically illustrates an exemplary composition of a computing unit 420 configured to execute a machine learning model provider for facilitating use of machine learning models in a system comprising a plurality of machine learning model providers, wherein the machine learning model provider is one of the plurality of machine learning model providers. The computing unit 420 comprises at least one processor 422 and at least one memory 424, wherein the at least one memory 424 contains instructions executable by the at least one processor 422 such that the machine learning model provider is operable to carry out the method steps described herein below with reference to the machine learning model provider.

It will be understood that each of the computing unit 400, the computing unit 410 and the computing unit 420 may be implemented on a physical computing unit or a virtualized computing unit, such as a virtual machine, for example. It will further be appreciated that each of the computing unit 400, the computing unit 410 and the computing unit 420 may not necessarily be implemented on a standalone computing unit, but may be implemented as components - realized in software and/or hardware - residing on multiple distributed computing units as well, such as in a cloud computing environment, for example.

Figure 5 illustrates a method which may be performed by the broker component executed on the computing unit 400 according to the present disclosure. The method is dedicated to facilitating use of machine learning models in a system comprising a plurality of machine learning model providers, wherein the broker component maintains a provider register containing information about the plurality of machine learning model providers and machine learning models provided by the plurality of machine learning model providers. In step S502, the broker component may receive a request for a desired machine learning model from a machine learning model consumer. In step S504, the broker component may determine, based on the information contained in the provider register, a machine learning model among the machine learning models provided by the machine learning model providers that matches the desired machine learning model. In step S506, the broker component may send a response to the machine learning model consumer providing information associated with the determined machine learning model.

The broker component may thus be used to distribute machine learning models between machine learning model providers and machine learning model consumers. Using the broker component, a machine learning model consumer may obtain access to a machine learning model which meets characteristics required by the machine learning model consumer, i.e., which may be most appropriate for an analytics scenario to be performed by the machine learning model consumer, for example. The machine learning model provider may be any component that stores a machine learning model (e.g., neural network, support vector machine, etc.) and that provides such model for use by machine learning model consumers. The machine learning model may be trained using data collected by the machine learning model provider or data provided to the machine learning model provider by another component. A machine learning model consumer may be any component that uses a machine learning model provided by a machine learning model provider for the purpose of making predictions based on input data passed to the machine learning model. In a 5G system, a machine learning model provider may be an NWDAF and a machine learning model consumer may be an NF which desires to use a machine learning model provided by an NWDAF, for example.

The broker component may determine the most appropriate machine learning model among the machine learning models provided by the machine learning model providers which are registered with the broker component (or, more specifically, with the provider register) by matching the desired machine learning model specified in the request from the machine learning model consumer with the machine learning models registered with the broker component. To this end, the request may include information characterizing the desired machine learning model, wherein determining the machine learning model that matches the desired machine learning model may include matching the information characterizing the desired machine learning model with the information contained in the provider register. To obtain the most appropriate machine learning model, a full match of the information characterizing the desired machine learning model with the information contained in the provider register may be required and, in another variant, a partial match may be sufficient, e.g., when a machine learning model fully matching the information characterizing the desired machine learning model is not available. If plural machine learning models at least partially match the information characterizing the desired machine learning model, the broker component may select the machine learning model which best matches the information characterizing the machine learning model, for example.

The information characterizing the desired machine learning model may include at least one of an expected output parameter (or output parameters) provided by the desired machine learning model, one or more expected input parameters required by the desired machine learning model, an expected type of the desired machine learning model (e.g., a clustering model, a time series model, etc.), and one or more evaluation metric based conditions indicative of output characteristics expected to be supported by the desired machine learning model. Exemplary evaluation metrics may include model accuracy, Mean Squared Error (MSE), F1 score, recall, Receiver Operating Characteristic (ROC) curve Area Under Curve (AUC), confusion matrix parameters (e.g., through-positives, false-negatives, correctness, sensitivity, specificity, etc.), and the like. Conditions defined based on evaluation metrics may be defined based on a single evaluation metric (e.g., model accuracy > 0.9, MSE < 0.1, etc.) or based on relationships between different evaluation metrics (e.g., combined by mathematical expressions or algorithms).

The information contained in the provider register with which the information characterizing the desired machine learning model is matched may correspond to the same type of information. As such, the information contained in the provider register may include, for each machine learning model provided by one of the plurality of machine learning model providers, at least one of an output parameter (or output parameters) provided by the respective machine learning model, one or more input parameters required by the respective machine learning model, a type of the respective machine learning model, and one or more evaluation metric values indicative of output characteristics supported by the respective machine learning model. To be able to provide access to a machine learning model provider upon request of a machine learning model consumer, the information contained in the provider register may also include access information (e.g., an IP address) for each of the plurality of machine learning providers.

The above information may be comprised in the provider register for every machine learning model of a machine learning model provider that has registered its machine learning models with the provider register. To this end, the broker component may receive, prior to receiving the request for the desired machine learning model, a registration message from each of the plurality of machine learning model providers to register its machine learning models with the provider register, e.g., along with the above-described information characterizing the respective machine learning model as well as the machine learning model provider itself.

A machine learning model consumer may employ the broker component in different ways to make use of a desired machine learning model. For example, the machine learning model consumer may employ the broker component to obtain the desired machine learning model for local use at the machine learning model consumer, to use the desired machine learning model remotely via the broker component (providing input data to the broker component and receiving results from the broker component), or to obtain information to directly access a machine learning model provider providing the desired machine learning model. The information associated with the determined machine learning model which is provided by the broker component in the response to the machine learning model consumer may differ depending on the type of use.

In one such variant, the request received from the machine learning model consumer may be a request to obtain the desired machine learning model for (e.g., local) use at the machine learning model consumer. In this case, the information associated with the determined machine learning model provided in the response to the machine learning model consumer may include the determined machine learning model. In the response to the machine learning model consumer, the determined machine learning model may be sent together with further information characterizing the determined machine learning model, such as the model type and a list of input parameters required by the model. In order to obtain the determined machine learning model for provision to the machine learning model consumer, the broker component may send a request for the determined machine learning model to the machine learning model provider providing the determined machine learning model, and receive the determined machine learning model from the machine learning model provider providing the determined machine learning model in response to the request. The request sent from the broker component to the machine learning model provider may include information specifying the determined machine learning model to be obtained (e.g., the output parameter), and the response sent from the machine learning model provider to the broker component may include information characterizing the determined machine learning model (e.g., the model type and the list of input parameters required by the model).

In another variant, the request received from the machine learning model consumer may be a request to subscribe for obtaining the desired machine learning model for use at the machine learning model consumer. In this case, the information associated with the determined machine learning model provided in the response to the machine learning model consumer may include a notification on the availability of the determined machine learning model and, optionally, the determined machine learning model. In the response, the determined machine learning model may be sent together with further information characterizing the determined machine learning model, such as the model type and a list of input parameters required by the model. At the time of subscription, the broker component may not yet have information about a machine learning model in the provider register which matches the desired machine learning model and may have to wait until a machine learning model provider registers an appropriate machine learning model with the broker component. The broker component may thus receive, upon receiving the request for the desired machine learning model, a registration message from a machine learning model provider to register its machine learning models with the provider register, wherein determining the machine learning model that matches the desired machine learning model may include checking the machine learning models registered by the registration message on a match with the desired machine learning model. If a match with the desired machine learning model is determined, the broker component may send a request for the determined machine learning model to the machine learning model provider providing the determined machine learning model, and receive the determined machine learning model from the machine learning model provider providing the determined machine learning model in response to the request. The request sent from the broker component to the machine learning model provider may include information specifying the determined machine learning model to be obtained (e.g., the output parameter), and the response sent from the machine learning model provider to the broker component may include information characterizing the determined machine learning model (e.g., the model type and the list of input parameters required by the model). In order to avoid sending duplicate machine learning models to the machine learning model consumer within the subscription, e.g., in case another machine learning model provider subsequently registers with the broker component, the broker component may be configured to send the response including the notification to the machine learning model consumer conditionally (e.g., only) when the determined machine learning model matches the desired machine learning model better than a machine learning model previously sent to the machine learning model consumer as matching the desired machine learning model.

In a further variant, the request received from the machine learning model consumer may be a request to use the desired machine learning model, wherein the request may include one or more input values to be passed as input to the desired machine learning model. In this case, the information associated with the determined machine learning model provided in the response to the machine learning model consumer may include an output value output by the determined machine learning model in response to the one or more input values. In order to obtain the output value from the determined machine learning model, the broker component may send the one or more input values to the machine learning model provider providing the determined machine learning model as input to the desired machine learning model, and receive an output value output by the determined machine learning model from the machine learning model provider providing the determined machine learning model in response to the one or more input values. The request sent from the broker component to the machine learning model provider may further include information specifying the machine learning model to be used (e.g., the output parameter).

In a still further variant, the request received from the machine learning model consumer may be a request to obtain access information to a machine learning model provider providing a machine learning model that matches the desired machine learning model. In this case, the information associated with the determined machine learning model provided in the response to the machine learning model consumer may include access information to the machine learning model provider providing the determined machine learning model (e.g., an IP address of the machine learning model provider). The access information may be obtained from the provider register, in which the access information may be stored when the machine learning model provider providing the determined machine learning model registers with the broker component, as described above.

As said, in a 5G system, the machine learning model provider may be an NWDAF and the machine learning model consumer may be an NF which desires to use a machine learning model provided by an NWDAF. The system may thus be a mobile communication system (e.g., a 5G system), wherein at least one of the plurality of machine learning model providers may be a NWDAF of the mobile communication system. In the system, the broker component may be provided as a standalone component or may be executed as a subcomponent of another component, e.g., as a subcomponent of an NRF, an NWDAF, or an NF in general. In order to make the broker component discoverable by other components (e.g., NFs) in the system, in particular in case the broker component is provided as a standalone component (e.g., when the broker component is deployed out of the NRF), the broker component may register itself with the NRF so that it is discoverable by other components using the NRF. In one variant, therefore, the system may be a mobile communication system and the broker component may be discoverable by at least one of the machine learning model consumer and the plurality of machine learning model providers via an NRF of the mobile communication system.

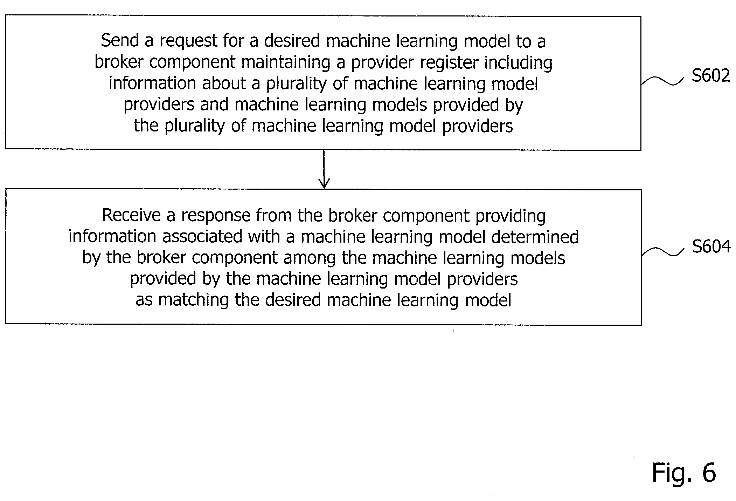

Figure 6 illustrates a method which may be performed by the machine learning model consumer executed on the computing unit 410 according to the present disclosure. The method is dedicated to facilitating use of machine learning models in a system comprising a plurality of machine learning model providers. The operation of the machine learning model consumer may be complementary to the operation of the broker component described above in relation to Figure 5 and, as such, aspects described above with regard to the operation of the machine learning model consumer may be applicable to the operation of the machine learning model consumer executed on the computing unit 410 described in the following as well, and vice versa. Unnecessary repetitions are thus omitted in the following.

In step S602, the broker component may send a request for a desired machine learning model to a broker component (e.g., the broker component executed on the computing unit 400) maintaining a provider register including information about the plurality of machine learning model providers and machine learning models provided by the plurality of machine learning model providers. In step S604, the broker component may receive a response from the broker component providing information associated with a machine learning model determined by the broker component among the machine learning models provided by the machine learning model providers as matching the desired machine learning model.

As described above in relation to Figure 5, the request sent by the machine learning model consumer may include information characterizing the desired machine learning model. The information characterizing the desired machine learning model may include at least one of an expected output parameter provided by the desired machine learning model, one or more expected input parameters required by the desired machine learning model, an expected type of the desired machine learning model, and one or more evaluation metric based conditions indicative of output characteristics expected to be supported by the desired machine learning model.

In one variant, the request may be a request to obtain the desired machine learning model for use at the machine learning model consumer. In this case, the information associated with the determined machine learning model provided in the response from the broker component may include the determined machine learning model. In another variant, the request may be a request to subscribe for obtaining the desired machine learning model for use at the machine learning model consumer. In this case, the information associated with the determined machine learning model provided in the response from the broker component may include a notification on the availability of the determined machine learning model and, optionally, the determined machine learning model. In a further variant, the request may be a request to use the desired machine learning model, wherein the request may include one or more input values to be passed as input to the desired machine learning model. In this case, the information associated with the determined machine learning model provided in the response from the broker component may include an output value output by the determined machine learning model in response to the one or more input values.

In a still further variant, the request may be a request to obtain access information to a machine learning model provider providing a machine learning model that matches the desired machine learning model. In this case, the information associated with the determined machine learning model provided in the response from the broker component may include access information to the machine learning model provider providing the determined machine learning model. In one particular such variant, the machine learning model consumer may send, using the access information, a request for the determined machine learning model to the machine learning model provider providing the determined machine learning model, and receive the determined machine learning model from the machine learning model provider providing the determined machine learning model in response to the request. The request sent from the machine learning model consumer to the machine learning model provider may include information specifying the determined machine learning model to be obtained (e.g., the output parameter), and the response sent from the machine learning model provider to the machine learning model consumer may include information characterizing the determined machine learning model (e.g., the model type and the list of input parameters required by the model).

In another such variant, the machine learning model consumer may send, to the machine learning model provider providing the determined machine learning model using the access information, a request to subscribe for obtaining the determined machine learning model for use at the machine learning model consumer, and receive, from the machine learning model provider providing the determined machine learning model, a notification on the availability of the determined machine learning model and, optionally, the determined machine learning model. In the notification, the determined machine learning model may be sent together with further information characterizing the determined machine learning model, such as the model type and a list of input parameters required by the model. The request to subscribe for obtaining the determined machine learning model may comprise the same information characterizing the desired machine learning model which has already be sent in the previous request to the machine learning model consumer, and the machine learning model provider may send the notification as soon and a new machine learning model is available at the machine learning provider that matches the desired machine learning model.

In a further such variant, the machine learning model consumer may send, to the machine learning model provider providing the determined machine learning model using the access information, a request to use the desired machine learning model, wherein the request may include one or more input values to be passed as input to the desired machine learning model, and receive, from the machine learning model provider providing the determined machine learning model, an output value output by the determined machine learning model in response to the one or more input values. The request sent from the machine learning model consumer to the machine learning model provider may further include information specifying that determined machine learning model to be used (e.g., the output parameter).

As described above in relation to Figure 5, the system may be a mobile communication system, wherein at least one of the plurality of machine learning model providers may be an NWDAF of the mobile communication system. Also, the system may be a mobile communication system and the broker component may be discoverable by at least one of the machine learning model consumer and the plurality of machine learning model providers via an NRF of the mobile communication system.

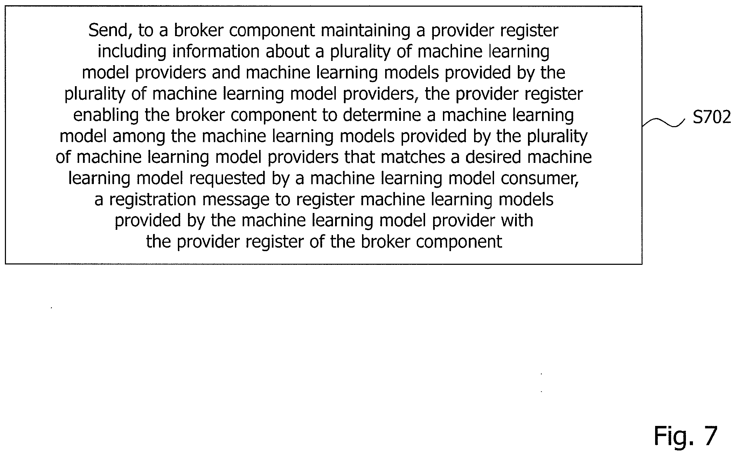

Figure 7 illustrates a method which may be performed by the machine learning model provider executed on the computing unit 420 according to the present disclosure. The method is dedicated to facilitating use of machine learning models in a system comprising a plurality of machine learning model providers, wherein the machine learning model provider is one of the plurality of machine learning model providers. The operation of the machine learning model provider may be complementary to the operation of the broker component described above in relation to Figure 5 and, as such, aspects described above with regard to the operation of the machine learning model provider may be applicable to the operation of the machine learning model provider described in the following as well, and vice versa. Unnecessary repetitions are thus omitted in the following.

In step S702, the machine learning model provider may send, to a broker component (e.g., to the broker component executed on computing unit 400) maintaining a provider register including information about the plurality of machine learning model providers and machine learning models provided by the plurality of machine learning model providers, the provider register enabling the broker component to determine a machine learning model among the machine learning models provided by the plurality of machine learning model providers that matches a desired machine learning model requested by a machine learning model consumer, a registration message to register machine learning models provided by the machine learning model provider with the provider register of the broker component.

As described above in relation to Figure 5, the registration message may include, for each machine learning model provided by the machine learning model provider, at least one of an output parameter provided by the respective machine learning model, one or more input parameters required by the respective machine learning model, a type of the respective machine learning model, and one or more evaluation metric values indicative of output characteristics supported by the respective machine learning model. The registration message may include access information for the machine learning model provider. The system may be a mobile communication system, wherein the machine learning model provider may be an NWDAF of the mobile communication system. Also, the system may be a mobile communication system and the broker component may be discoverable by at least one of the machine learning model consumer and the plurality of machine learning model providers via an NRF of the mobile communication system.

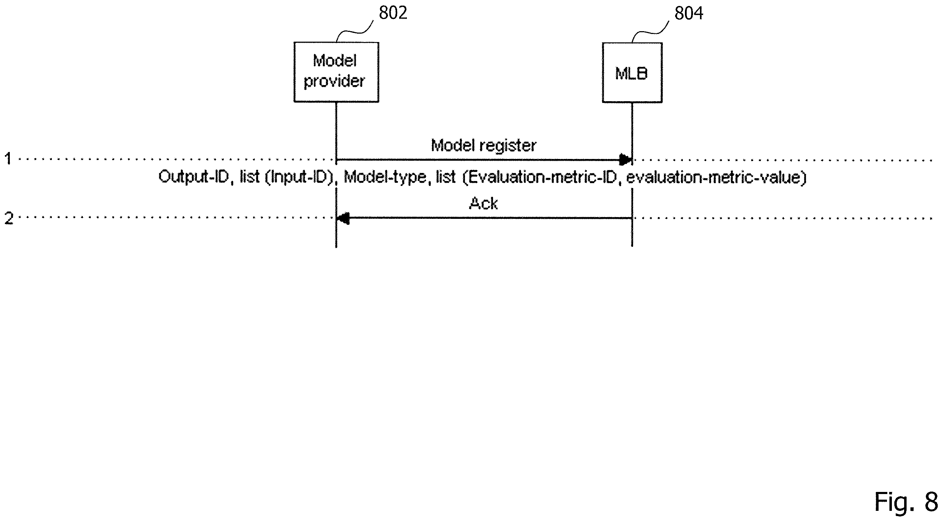

Figure 8 illustrates a signaling diagram of an exemplary process in which a machine learning model provider 802 registers with a broker component 804 (denoted "machine learning broker" (MLB) in the figure) according to the present disclosure. In step 1 of the process, the machine learning model provider 802 may send a registration message to the broker component 804 to register a machine learning model with the broker component 804. The registration message may include an identification of an output parameter provided by the machine learning model, a list of identifications of input parameters required by the machine learning model, an indication of the type of the machine learning model, and a list of tuples each including an identification of an evaluation metric and a corresponding elevation metric value. In step 2, the broker component 804 may respond with an acknowledgment for the registration.

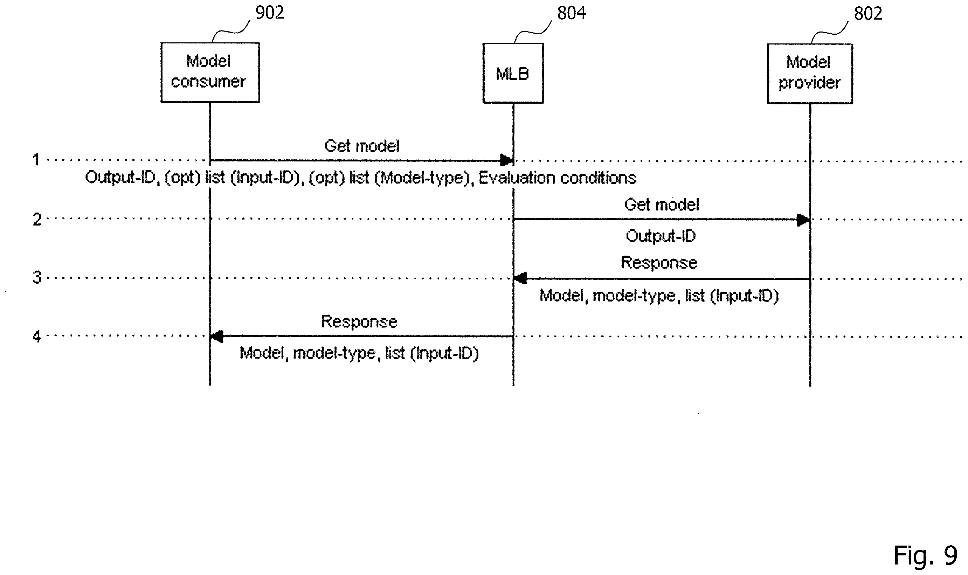

Figure 9 illustrates a signaling diagram of an exemplary process in which a machine learning model consumer 902 obtains a desired machine learning model for use at the machine learning model consumer 902 from the machine learning model provider 802 via the broker component 804 according to the present disclosure. In step 1 of the process, the machine learning model consumer 902 may send a "get model" message to the broker component 804, wherein the message may include an identification of an expected output parameter provided by the machine learning model, a list of identifications of expected input parameters required by the machine learning model, a list of indications of expected types of the machine learning model (e.g., model types supported by the machine learning model consumer 902), and evaluation conditions indicative of output characteristics expected to be supported by the machine learning model. In step 2, the broker component 804 may check the matching machine learning models using the information contained in the provider register and send a "get model" message including the identification of the output parameter to the machine learning model provider 802 providing the determined machine learning model. In step 3, the machine learning model provider 802 may respond to the broker component 804 together with the machine learning model, the model type and a list of identifications of input parameters required by the model. In step 4, the broker component 804 may respond to the machine learning model consumer 902 together with the machine learning model, the model type and the list of identifications of input parameters required by the model accordingly.

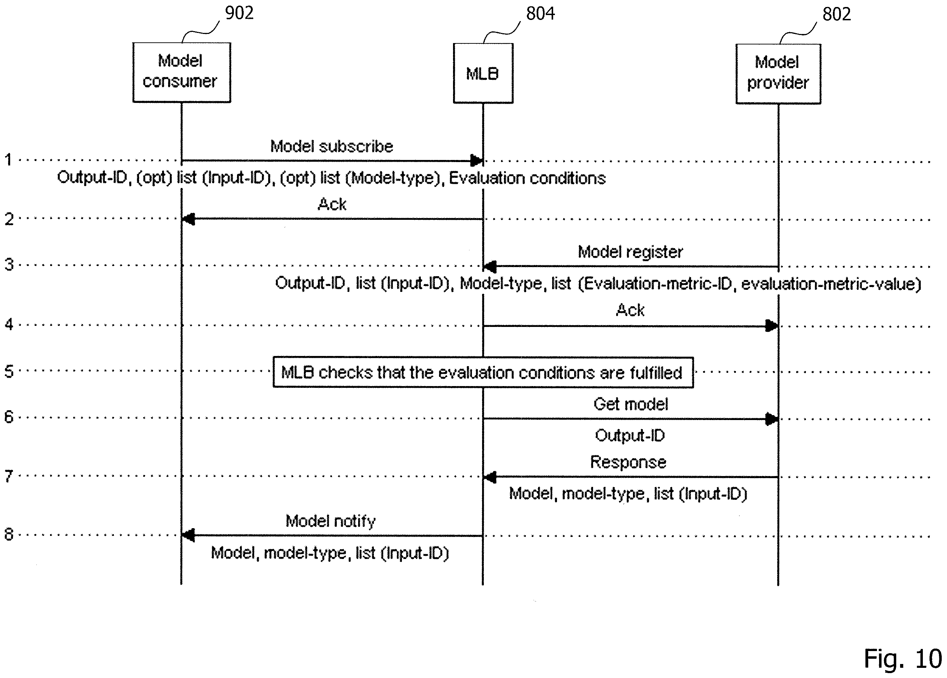

Figure 10 illustrates a signaling diagram of an exemplary process in which the machine learning model consumer 902 subscribes for obtaining the desired machine learning model for use at the machine learning model consumer 902 according to the present disclosure. In step 1 of the process, the machine learning model consumer 902 may send a "model subscribe" message to the broker component 804, wherein the message may include an identification of an expected output parameter provided by the machine learning model, a list of identifications of expected input parameters required by the machine learning model, a list of indications of expected types of the machine learning model (e.g., model types supported by the machine learning model consumer 902), and evaluation conditions indicative of output characteristics expected to be supported by the machine learning model. In step 2, the broker component 804 may respond with an acknowledgment for the subscription. At this time, the broker component 804 may not yet have information about a machine learning model in the provider register which matches the desired machine learning model and the broker component 804 may therefore wait until a machine learning provider registers an appropriate machine learning model with the broker component 804. In step 3, such registration may take place and, therefore, the learning machine model provider 802 may register a new machine learning model with the broker component 804 (e.g., following the procedure described above in relation to Figure 8). In step 4, the broker component 804 may respond with an acknowledgment for the registration. In step 5, the broker component 804 may check whether the new machine learning model fulfills the evaluation conditions desired by the machine learning model consumer 902. If the broker component 804 has already provided a machine learning model to the machine learning model consumer 902 previously, the broker component 804 may check whether the new model better fulfills the conditions as compared to the model previously provided to the machine learning model consumer 902 and, if the new model does not improve the old model, the new model may not be provided to the machine learning model consumer 902. Otherwise, or if a machine learning model has not been provided to the machine learning model consumer 902 previously, the broker component 804 may, in step 6, send a "get model" message to the machine learning model provider 802 including the identification of the output parameter. In step 7, the machine learning model provider 802 may respond to the broker component 804 together with the machine learning model, the model type and a list of identifications of input parameters required by the model. In step 8, the broker component 804 may send a notification to the machine learning model consumer 902 together with the machine learning model, the model type and the list of identifications of input parameters required by the model accordingly.

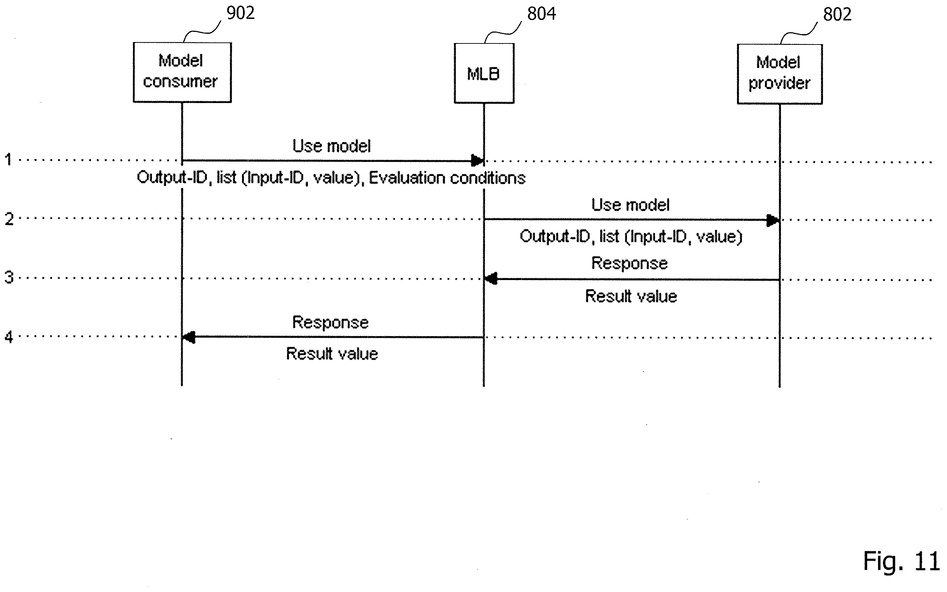

Figure 11 illustrates a signaling diagram of an exemplary process in which the machine learning model consumer 902 uses the desired machine learning model via the broker component 804 according to the present disclosure. In step 1 of the process, the machine learning model consumer 902 may send a "use model" message to the broker component 804, wherein the message may include an identification of the expected output parameter provided by the machine learning model, a list of tuples each including an identification of an input parameter together with a corresponding input value (i.e., representing the input for the machine learning model including input parameters and values), and evaluation conditions indicative of output characteristics expected to be supported by the machine learning model. In step 2, the broker component 804 may check the matching machine learning models using the information contained in the provider register and send a "use model" message to the machine learning model provider 802 including the identification of the output parameter and the list of tuples representing the input for the machine learning model. In step 3, the machine learning model provider 802 may pass the input to the machine learning model and execute the machine learning model to obtain a result value representing the output from the machine learning model and, once available, the machine learning model provider 802 may respond to the broker component 804 with the result value. In step 4, the broker component 804 may forward the result value to the machine learning model consumer 902 accordingly.

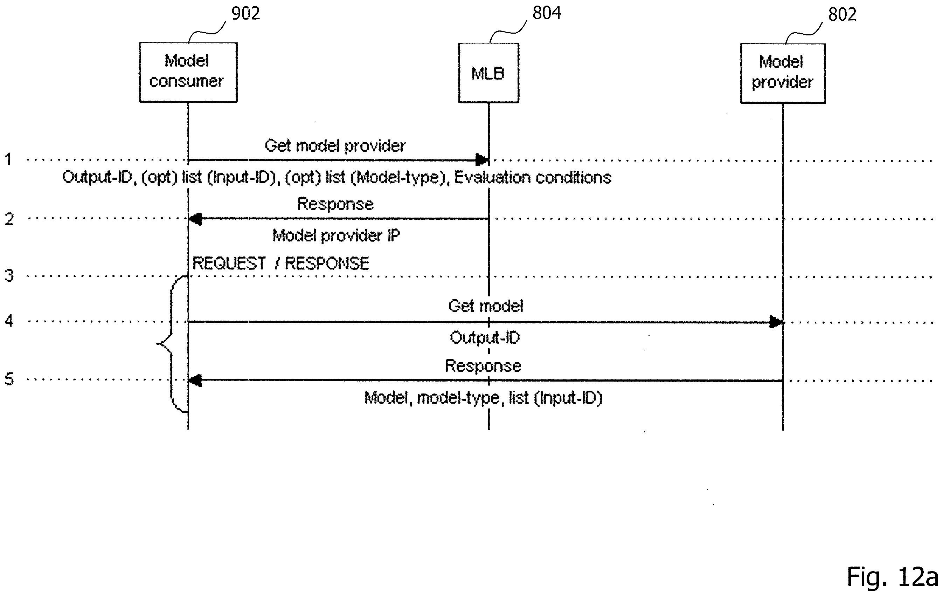

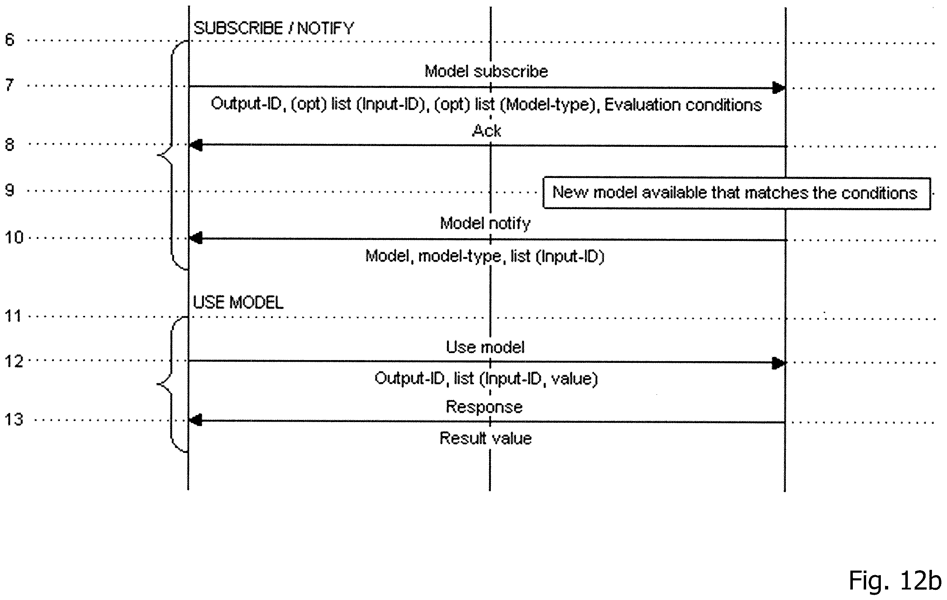

Figures 12a and 12b illustrate a signaling diagram of an exemplary process in which the machine learning model consumer 902 obtains access information to the machine learning model provider 802 from the broker component 804 to obtain (or use) the desired machine learning model directly from the machine learning model provider 802 according to the present disclosure. In step 1 of the process, the machine learning model consumer 902 may send a "get model provider" message to the broker component 804, wherein the message may include an identification of an expected output parameter provided by the machine learning model, a list of identifications of expected input parameters required by the machine learning model, a list of indications of expected types of the machine learning model (e.g., model types supported by the machine learning model consumer 902), and evaluation conditions indicative of output characteristics expected to be supported by the machine learning model. In step 2, the broker component may check the matching machine learning models using the information contained in the provider register and respond to the machine learning model consumer 902 with the IP address of the machine learning model provider 802 providing the desired machine learning model. Alternatively, the broker component 804 may provide a list of matching machine learning model providers and the model consumer 902 may decide which model provider to use. Upon receipt of the IP address, the machine learning model consumer 902 may have different options to obtain or use the desired machine learning model. The first option is indicated in steps 3 to 5, wherein the machine learning model consumer 902 sends a "get model" message to the machine learning model provider 802 including the indication of the output parameter, and the machine learning model provider 802 responds together with the machine learning model, the model type and a list of identifications of input parameters required by the model. The second option is indicated in steps 6 to 10 (shown in Figure 12b), wherein the machine learning model consumer 902 sends a "model subscribe" message to the machine learning model consumer 902 (including an identification of an expected output parameter provided by the machine learning model, a list of identifications of expected input parameters required by the machine learning model, a list of indications of expected types of the machine learning model, e.g., model types supported by the machine learning model consumer 902, and evaluation conditions indicative of output characteristics expected to be supported by the machine learning model), and wherein the machine learning model provider 802 responds with an acknowledgment for the subscription and sends a notification, once a new machine learning model is available that matches the conditions, to the machine learning model consumer 902 including the new machine learning model together with the model type and a list of identifications of input parameters required by the model. The third option is indicated in steps 11 to 13, wherein the machine learning model consumer 902 sends a "use model" message to the machine learning model provider 802 including the identification of the output parameter provided by the machine learning model as well as a list of tuples each including an identification of an input parameter together with a corresponding input value (i.e., representing the input for the machine learning model including input parameters and values), and wherein the machine learning model provider 802 responds, upon execution of the machine learning model based on the provided input, with the corresponding result value output by the machine learning model.

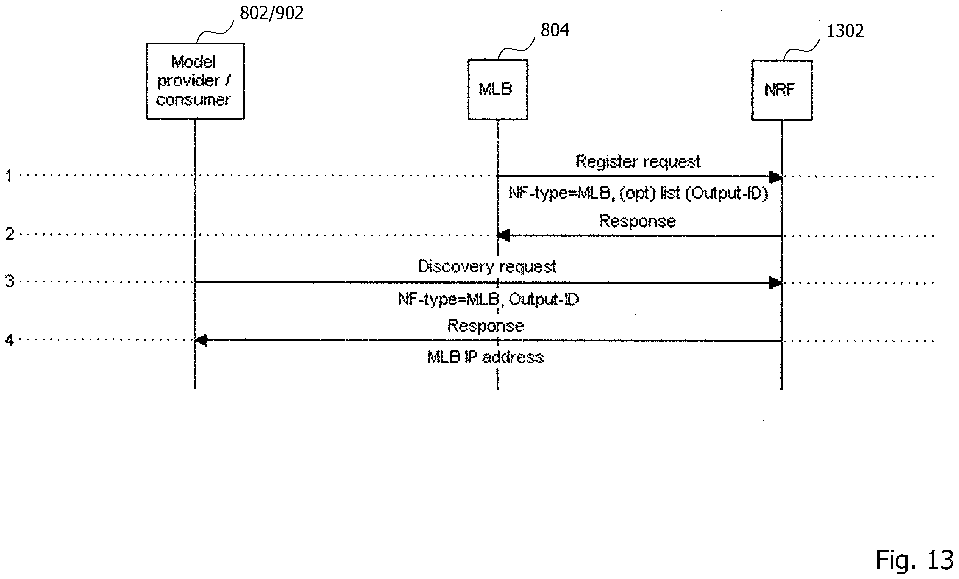

Figure 13 illustrates a signaling diagram of an exemplary process in which the broker component 804 registers with an NRF 1302 so that the broker component 804 is discoverable by machine learning model consumers and providers 802, 902 according to the present disclosure. In step 1 of the process, the broker component 804 may send a registration request to the NRF 1302, wherein the request may include an indication of the type of the NF to be registered (which, in this case, equals to "MLB") and, optionally, a list of identifications of output parameters which the broker component 804 supports (which may be expedient if there are different broker components supporting different output parameters). In step 2, the NRF 1302 may respond with an acknowledgment of the registration request. Subsequently, the broker component 804 may be discoverable by machine learning model providers and consumers 802, 902 via the NRF 1302. Therefore, when a machine learning model provider or consumer 802, 902 wants to discover the broker component 804 to register or get/use a machine learning model, respectively, the machine learning model provider or consumer 802, 902 may send, in step 3, a discovery request to the NRF 1302, wherein the request may include an indication of the type of NF to be discovered (which, in this case, equals to "MLB") and an indication of the output parameter of the machine learning model which the machine learning model provider or consumer 802, 902 wishes to register or get/use, respectively. In step 4, the NRF 1302 may respond to the machine learning model provider or consumer 802, 902 together with the IP address of the broker component 804 to thereby enable the machine learning model provider or consumer 802, 902 to access the broker component 804.

As has become apparent from the above, the present disclosure provides a technique for facilitating use of machine learning models in a system comprising a plurality of machine learning model providers. The presented technique is generally based on a machine learning broker which registers model providers and the models they produce, wherein model consumers query the broker for a desired model. The technique thus enables dynamic provision and consumption of machine learning models. In particular, the technique may allow model consumers to get models from different model providers, wherein model consumers may specify what characteristics the desired model should have. The broker may act as proxy so that model consumers may not be aware of the model providers. In some variants, the broker may provide the models directly to the consumers while, in other variants, the broker may route the model usage requests along with the input parameters to the model provider and provide the results back to the model consumer. Using the technique presented herein, it may also be conceivable that the broker distributes model requests between different model providers following a certain distribution (e.g., evenly, based on the model provider resources, etc.), such as for load balancing purposes, for example.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A method for facilitating use of machine learning models in a mobile communication system comprising a plurality of machine learning model providers (802), at least one of the plurality of machine learning model providers (802) being a network data analytics function, NWDAF, of the mobile communication system, the method being performed by a broker component (804) maintaining a provider register containing information about the plurality of machine learning model providers (802) and machine learning models provided by the plurality of machine learning model providers (802), the broker component (804) being discoverable by at least one of a machine learning model consumer (902) and the plurality of machine learning model providers (802) via a network repository function, NRF, (1302) of the mobile communication system, the method comprising:
receiving (S502) a request for a desired machine learning model from the machine learning model consumer (902);
determining (S504), based on the information contained in the provider register, a machine learning model among the machine learning models provided by the machine learning model providers (802) that matches the desired machine learning model; and
sending (S506) a response to the machine learning model consumer (902) providing information associated with the determined machine learning model,
wherein the request is at least one of (i) a request to obtain the desired machine learning model for use at the machine learning model consumer (902), (ii) a request to subscribe for obtaining the desired machine learning model for use at the machine learning model consumer (902), and (iii) a request to obtain access information to a machine learning model provider (802) providing a machine learning model that matches the desired machine learning model.

2. The method of claim 1, wherein the request includes information characterizing the desired machine learning model and wherein determining the machine learning model that matches the desired machine learning model includes matching the information characterizing the desired machine learning model with the information contained in the provider register, wherein, optionally, the information characterizing the desired machine learning model includes at least one of:
an expected output parameter provided by the desired machine learning model,
one or more expected input parameters required by the desired machine learning model,
an expected type of the desired machine learning model, and
one or more evaluation metric based conditions indicative of output characteristics expected to be supported by the desired machine learning model.

3. The method of claim 1 or 2, wherein:
- the information contained in the provider register includes, for each machine learning model provided by one of the plurality of machine learning model providers (802), at least one of:
an output parameter provided by the respective machine learning model,
one or more input parameters required by the respective machine learning model,
a type of the respective machine learning model, and
one or more evaluation metric values indicative of output characteristics supported by the respective machine learning model; and/or
- the information contained in the provider register includes access information for each of the plurality of machine learning model providers (802).

4. The method of any one of claims 1 to 3, further comprising:
receiving, prior to receiving (S502) the request for the desired machine learning model, a registration message from each of the plurality of machine learning model providers (802) to register its machine learning models with the provider register.

5. The method of any one of claims 1 to 4, wherein, when the request is a request to obtain the desired machine learning model for use at the machine learning model consumer (902):
- the information associated with the determined machine learning model provided in the response to the machine learning model consumer (902) includes the determined machine learning model; and/or
- the method further comprises:
sending a request for the determined machine learning model to the machine learning model provider (802) providing the determined machine learning model; and
receiving the determined machine learning model from the machine learning model provider (802) providing the determined machine learning model in response to the request.

6. The method of any one of claims 1 to 5, wherein, when the request is a request to subscribe for obtaining the desired machine learning model for use at the machine learning model consumer (902), the information associated with the determined machine learning model provided in the response to the machine learning model consumer (902) includes a notification on the availability of the determined machine learning model and, optionally, the determined machine learning model, wherein, optionally, the response including the notification is sent to the machine learning model consumer (902) conditionally when the determined machine learning model matches the desired machine learning model better than a machine learning model previously sent to the machine learning model consumer (902) as matching the desired machine learning model.

7. The method of any one of claims 1 to 6, wherein, when the request is a request to subscribe for obtaining the desired machine learning model for use at the machine learning model consumer (902), the method further comprises:
receiving, upon receiving the request for the desired machine learning model, a registration message from a machine learning model provider (802) to register its machine learning models with the provider register, wherein determining (S504) the machine learning model that matches the desired machine learning model includes checking the machine learning models registered by the registration message on a match with the desired machine learning model;
if a match with the desired machine learning model is determined, sending a request for the determined machine learning model to the machine learning model provider (802) providing the determined machine learning model; and
receiving the determined machine learning model from the machine learning model provider (802) providing the determined machine learning model in response to the request.

8. The method of any one of claims 1 to 7, wherein, when the request is a request to obtain access information to a machine learning model provider (802) providing a machine learning model that matches the desired machine learning model, the information associated with the determined machine learning model provided in the response to the machine learning model consumer (902) includes access information to the machine learning model provider (802) providing the determined machine learning model.

9. A method for facilitating use of machine learning models in a mobile communication system comprising a plurality of machine learning model providers (802), at least one of the plurality of machine learning model providers (802) being a network data analytics function, NWDAF, of the mobile communication system, the method being performed by a machine learning model consumer (902) and comprising:
sending (S602) a request for a desired machine learning model to a broker component (804) maintaining a provider register including information about the plurality of machine learning model providers (802) and machine learning models provided by the plurality of machine learning model providers (802), the broker component (804) being discoverable by at least one of the machine learning model consumer (902) and the plurality of machine learning model providers (802) via a network repository function, NRF, (1302) of the mobile communication system; and
receiving (S604) a response from the broker component (804) providing information associated with a machine learning model determined by the broker component (804) among the machine learning models provided by the machine learning model providers (802) as matching the desired machine learning model,
wherein the request is at least one of (i) a request to obtain the desired machine learning model for use at the machine learning model consumer (902), (ii) a request to subscribe for obtaining the desired machine learning model for use at the machine learning model consumer (902), and (iii) a request to obtain access information to a machine learning model provider (802) providing a machine learning model that matches the desired machine learning model.

10. A method for facilitating use of machine learning models in a mobile communication system comprising a plurality of machine learning model providers (802), the method being performed by a machine learning model provider (802) of the plurality of machine learning model providers (802) that is a network data analytics function, NWDAF, of the mobile communication system, and comprising:
sending (S702), to a broker component (804) maintaining a provider register including information about the plurality of machine learning model providers (802) and machine learning models provided by the plurality of machine learning model providers (802), the provider register enabling the broker component (804) to determine a machine learning model among the machine learning models provided by the plurality of machine learning model providers (802) that matches a desired machine learning model requested by a request of a machine learning model consumer (902), a registration message to register machine learning models provided by the machine learning model provider (802) with the provider register of the broker component (804), the broker component (804) being discoverable by at least one of the machine learning model consumer (902) and the plurality of machine learning model providers (802) via a network repository function, NRF, (1302) of the mobile communication system,
wherein the request is at least one of (i) a request to obtain the desired machine learning model for use at the machine learning model consumer (902), (ii) a request to subscribe for obtaining the desired machine learning model for use at the machine learning model consumer (902), and (iii) a request to obtain access information to a machine learning model provider (802) providing a machine learning model that matches the desired machine learning model.

11. A computer program product (404, 414, 424) comprising program code portions for performing the method of any one of claims 1 to 10 when the computer program product is executed on one or more computing devices (402, 412, 422).

12. A computing unit (400) configured to execute a broker component (804) for facilitating use of machine learning models in a mobile communication system comprising a plurality of machine learning model providers (802), at least one of the plurality of machine learning model providers (802) being a network data analytics function, NWDAF, of the mobile communication system, the broker component (804) being discoverable by at least one of a machine learning model consumer (902) and the plurality of machine learning model providers (802) via a network repository function, NRF, (1302) of the mobile communication system and maintaining a provider register including information about the plurality of machine learning model providers (802) and machine learning models provided by the plurality of machine learning model providers (802), the computing unit (400) comprising at least one processor (402) and at least one memory (404), the at least one memory (404) containing instructions executable by the at least one processor (402) such that the broker component (804) is operable to perform the method of any one of claims 1 to 8.

13. A computing unit (410) configured to execute a machine learning model consumer (902) for facilitating use of machine learning models in a mobile communication system comprising a plurality of machine learning model providers (802), at least one of the plurality of machine learning model providers (802) being a network data analytics function, NWDAF, of the mobile communication system, the computing unit (410) comprising at least one processor (412) and at least one memory (414), the at least one memory (414) containing instructions executable by the at least one processor (412) such that the machine learning model consumer (902) is operable to perform the method of claim 9.

14. A computing unit (420) configured to execute a machine learning model provider (802) for facilitating use of machine learning models in a mobile communication system comprising a plurality of machine learning model providers (802), the machine learning model provider (802) being one of the plurality of machine learning model providers (802) and being a network data analytics function, NWDAF, of the mobile communication system, the computing unit (420) comprising at least one processor (422) and at least one memory (424), the at least one memory (424) containing instructions executable by the at least one processor (422) such that the machine learning model provider (802) is operable to perform the method of claim 10.

## Patentansprüche

1. Verfahren zur Ermöglichung der Verwendung von Modellen für maschinelles Lernen in einem Mobilkommunikationssystem, das eine Mehrzahl von Anbietern (802) von Modellen für maschinelles Lernen umfasst, wobei mindestens einer der Mehrzahl von Anbietern (802) von Modellen für maschinelles Lernen eine Netzwerkdatenanalysefunktion, NWDAF, des Mobilkommunikationssystems ist, das Verfahren von einer Broker-Komponente (804) durchgeführt wird, die ein Anbieterregister führt, das Informationen über die Mehrzahl von Anbietern (802) von Modellen für maschinelles Lernen und Modelle für maschinelles Lernen enthält, die von der Mehrzahl von Anbietern (802) von Modellen für maschinelles Lernen bereitgestellt werden, die Broker-Komponente (804) von mindestens einem von einem Verbraucher (902) von Modellen für maschinelles Lernen und der Mehrzahl von Anbietern (802) von Modellen für maschinelles Lernen über eine Netzwerk-Repository-Funktion, NRF, (1302) des Mobilkommunikationssystems erkennbar ist und das Verfahren Folgendes umfasst:
Empfangen (S502) einer Anforderung für ein gewünschtes Modell für maschinelles Lernen vom Verbraucher (902) von Modellen für maschinelles Lernen;
Bestimmen (S504) eines Modells für maschinelles Lernen unter den von den Anbietern (802) von Modellen für maschinelles Lernen bereitgestellten Modellen für maschinelles Lernen, das mit dem gewünschten Modell für maschinelles Lernen übereinstimmt, basierend auf den im Anbieterregister enthaltenen Informationen; und
Senden (S506) einer Antwort an den Verbraucher von Modellen für maschinelles Lernen (902), die die mit dem bestimmten Modell für maschinelles Lernen assoziierten Informationen bereitstellt,
wobei die Anforderung mindestens eine ist von (i) einer Anforderung zum Erhalten des gewünschten Modells für maschinelles Lernen zur Verwendung am Verbraucher (902) von Modellen für maschinelles Lernen, (ii) einer Anforderung zum Abonnieren des Erhalts des gewünschten Modells für maschinelles Lernen zur Verwendung am Verbraucher (902) von Modellen für maschinelles Lernen und (iii) einer Anforderung zum Erhalten von Zugriffsinformationen für einen Anbieter (802) von Modellen für maschinelles Lernen, der ein Modell für maschinelles Lernen bereitstellt, das mit dem gewünschten Modell für maschinelles Lernen übereinstimmt.

2. Verfahren nach Anspruch 1, wobei die Anforderung Informationen umfasst, die das gewünschte Modell für maschinelles Lernen beschreiben, und wobei das Bestimmen des Modells für maschinelles Lernen, das mit dem gewünschten Modell für gewünschtes Lernen übereinstimmt, ein Vergleichen der das Modell für maschinelles Lernen beschreibenden Informationen mit den im Anbieterregister enthaltenen Informationen umfasst, wobei optional die das Modell für maschinelles Lernen beschreibenden Informationen mindestens eines von Folgenden umfassen:
einen voraussichtlichen Ausgabeparameter, der vom gewünschten Model für maschinelles Lernen bereitgestellt wird,
einen oder mehrere voraussichtliche Eingabeparameter, die vom gewünschten Modell für maschinelles Lernen benötigt werden,
einen voraussichtlichen Typ des gewünschten Modells für maschinelles Lernen und
eine oder mehrere auf einer Bewertungsmetrik basierenden Bedingungen, die Ausgabecharakteristiken angeben, die vom gewünschten Modell für maschinelles Lernen voraussichtlich unterstützt werden sollen.

3. Verfahren nach Anspruch 1 oder 2, wobei:
- die im Anbieterregister enthaltenen Informationen für jedes Modell für maschinelles Lernen, das von einem der Mehrzahl von Anbietern (802) von Modellen für maschinelles Lernen bereitgestellt wird, mindestens eines von Folgenden umfassen:
einen Ausgabeparameter, der vom jeweiligen Model für maschinelles Lernen bereitgestellt wird,
einen oder mehrere Eingabeparameter, die vom jeweiligen Modell für maschinelles Lernen benötigt werden,
einen Typ des jeweiligen Modells für maschinelles Lernen und
einen oder mehrere Bewertungsmetrikwerte, die Ausgabecharakteristiken angeben, die vom jeweiligen Modell für maschinelles Lernen unterstützt werden; und/oder
- die im Anbieterregister enthaltenen Informationen Zugriffsinformationen für jeden der Mehrzahl von Anbietern (802) von Modellen für maschinelles Lernen umfassen.

4. Verfahren nach einem der Ansprüche 1 bis 3, ferner umfassend:
Empfangen einer Registrierungsnachricht von jedem der Mehrzahl von Anbietern (802) von Modellen für maschinelles Lernen zum Registrieren seiner Modelle für maschinelles Lernen beim Anbieterregister vor dem Empfangen (S502) der Anforderung für das gewünschte Modell für maschinelles Lernen.

5. Verfahren nach einem der Ansprüche 1 bis 4, wobei, wenn die Anforderung eine Anforderung zum Erhalten des gewünschten Modells für maschinelles Lernen zur Verwendung am Verbraucher (902) von Modellen für maschinelles Lernen ist:
- die Informationen, die mit dem bestimmten Modell für maschinelles Lernen assoziiert sind und in der Antwort an den Verbraucher (902) von Modellen für maschinelles Lernen bereitgestellt werden, das bestimmte Modell für maschinelles Lernen umfassen; und/oder
- das Verfahren ferner umfasst:
Senden einer Anforderung für das bestimmte Modell für maschinelles Lernen an den Anbieter (802) von Modellen für maschinelles Lernen, der das bestimmte Modell für maschinelles Lernen bereitstellt; und
Empfangen des bestimmten Modells für maschinelles Lernen vom Anbieter (802) von Modellen für maschinelles Lernen, der das bestimmte Modell für maschinelles Lernen bereitstellt, in einer Antwort auf die Anforderung.

6. Verfahren nach einem der Ansprüche 1 bis 5, wobei, wenn die Anforderung eine Anforderung zum Abonnieren des Erhalts des gewünschten Modells für maschinelles Lernen zur Verwendung am Verbraucher (902) von Modellen für maschinelles Lernen ist, die Informationen, die mit dem bestimmten Modell für maschinelles Lernen assoziiert sind und in der Antwort an den Verbraucher (902) von Modellen für maschinelles Lernen bereitgestellt werden, eine Benachrichtigung über die Verfügbarkeit des bestimmten Modells für maschinelles Lernen und optional das bestimmte Modell für maschinelles Lernen umfassen, wobei optional die Antwort, die die Benachrichtigung umfasst, unter der Bedingung an den Verbraucher (902) von Modellen für maschinelles Lernen gesendet wird, dass das bestimmte Modell für maschinelles Lernen mit dem gewünschten Modell für maschinelles Lernen besser übereinstimmt als ein Modell für maschinelles Lernen, das zuvor als mit dem gewünschten Modell für maschinelles Lernen übereinstimmend an den Verbraucher (902) von Modellen für maschinelles Lernen gesendet wurde.

7. Verfahren nach einem der Ansprüche 1 bis 6, wobei das Verfahren, wenn die Anforderung eine Anforderung zum Abonnieren des Erhalts des gewünschten Modells für maschinelles Lernen zur Verwendung am Verbraucher (902) von Modellen für maschinelles Lernen ist, ferner Folgendes umfasst:
Empfangen einer Registrierungsnachricht von einem Anbieter (802) von Modellen für maschinelles Lernen zum Registrieren seiner Modelle für maschinelles Lernen beim Anbieterregister bei Empfang der Anforderung für das gewünschte Modell für maschinelles Lernen, wobei das Bestimmen (S504) des Modells für maschinelles Lernen, das mit dem gewünschten Modell für maschinelles Lernen übereinstimmt, ein Überprüfen der durch die Registrierungsnachricht registrierten Modelle für maschinelles Lernen auf eine Übereinstimmung mit dem gewünschten Modell für maschinelles Lernen umfasst;
Senden, wenn eine Übereinstimmung mit dem gewünschten Modell für maschinelles Lernen bestimmt wird, einer Anforderung für das bestimmte Modell für maschinelles Lernen an den Anbieter (802) von Modellen für maschinelles Lernen, der das bestimmte Modell für maschinelles Lernen bereitstellt; und
Empfangen des bestimmten Modells für maschinelles Lernen vom Anbieter (802) von Modellen für maschinelles Lernen, der das bestimmte Modell für maschinelles Lernen bereitstellt, in der Antwort auf die Anforderung.

8. Verfahren nach einem der Ansprüche 1 bis 7, wobei, wenn die Anforderung eine Anforderung zum Erhalten von Zugriffsinformationen für einen Anbieter (802) von Modellen für maschinelles Lernen ist, der ein Modell für maschinelles Lernen bereitstellt, das mit dem gewünschten Modell für maschinelles Lernen übereinstimmt, die Informationen, die mit dem bestimmten Modell für maschinelles Lernen assoziiert sind und in der Antwort an den Verbraucher (902) von Modellen für maschinelles Lernen bereitgestellt werden, Zugriffsinformationen für den Anbieter (802) von Modellen für maschinelles Lernen umfassen, der das bestimmte Modell für maschinelles Lernen bereitstellt.

9. Verfahren zur Ermöglichung der Verwendung von Modellen für maschinelles Lernen in einem Mobilkommunikationssystem, das eine Mehrzahl von Anbietern (802) von Modellen für maschinelles Lernen umfasst, wobei mindestens einer der Mehrzahl von Anbietern (802) von Modellen für maschinelles Lernen eine Netzwerkdatenanalysefunktion, NWDAF, des Mobilkommunikationssystems ist, wobei das Verfahren von einem Verbraucher (902) von Modellen für maschinelles Lernen durchgeführt wird und Folgendes umfasst:
Senden (S602) einer Anforderung für ein gewünschtes Modell für maschinelles Lernen an eine Broker-Komponente (804), die ein Anbieterregister führt, das Informationen über die Mehrzahl von Anbietern (802) von Modellen für maschinelles Lernen und Modelle für maschinelles Lernen umfasst, die von der Mehrzahl von Anbietern (802) von Modellen für maschinelles Lernen bereitgestellt werden, wobei die Broker-Komponente (804) von mindestens einem von dem Verbraucher (902) von Modellen für maschinelles Lernen und der Mehrzahl von Anbietern (802) von Modellen für maschinelles Lernen über eine Netzwerk-Repository-Funktion, NRF, (1302) des Mobilkommunikationssystems erkennbar ist; und
Empfangen (S604) einer Antwort von der Broker-Komponente (804), die Informationen bereitstellt, die mit einem Modell für maschinelles Lernen assoziiert sind, das von der Broker-Komponente (804) unter den von den Anbietern (802) von Modellen für maschinelles Lernen als mit dem gewünschten Modell für maschinelles Lernen übereinstimmend bestimmt wird,
wobei die Anforderung mindestens eine ist von (i) einer Anforderung zum Erhalten des gewünschten Modells für maschinelles Lernen zur Verwendung am Verbraucher (902) von Modellen für maschinelles Lernen, (ii) einer Anforderung zum Abonnieren des Erhalts des gewünschten Modells für maschinelles Lernen zur Verwendung am Verbraucher (902) von Modellen für maschinelles Lernen und (iii) einer Anforderung zum Erhalten von Zugriffsinformationen für einen Anbieter (802) von Modellen für maschinelles Lernen, der ein Modell für maschinelles Lernen bereitstellt, das mit dem gewünschten Modell für maschinelles Lernen übereinstimmt.

10. Verfahren zur Ermöglichung der Verwendung von Modellen für maschinelles Lernen in einem Mobilkommunikationssystem, das eine Mehrzahl von Anbietern (802) von Modellen für maschinelles Lernen umfasst, wobei das Verfahren von einem Anbieter (802) von Modellen für maschinelles Lernen der Mehrzahl von Anbietern (802) von Modellen für maschinelles Lernen, der eine Netzwerkdatenanalysefunktion, NWDAF, des Mobilkommunikationssystems ist, durchgeführt wird und Folgendes umfasst:
Senden (S702) einer Registrierungsnachricht zum Registrieren von Modellen für maschinelles Lernen, die von einem Anbieter (802) von Modellen für maschinelles Lernen bereitgestellt werden, beim Anbieterregister einer Broker-Komponente (804) an die Broker-Komponente (804), die ein Anbieterregister führt, das Informationen über die Mehrzahl von Anbietern (802) von Modellen für maschinelles Lernen und Modelle für maschinelles Lernen umfasst, die von der Mehrzahl von Anbietern (802) für maschinelles Lernen bereitgestellt werden, wobei das Anbieterregister die Broker-Komponente (804) dazu befähigt, ein Modell für maschinelles Lernen unter den von der Mehrzahl von Anbietern (802) von Modellen für maschinelles Lernen bereitgestellten Modellen für maschinelles Lernen zu bestimmen, das mit einem gewünschten Modell für maschinelles Lernen übereinstimmt, das durch eine Anforderung eines Verbrauchers (902) von Modellen für maschinelles Lernen angefordert wird, wobei Broker-Komponente (804) von mindestens einem von dem Verbraucher (902) von Modellen für maschinelles Lernen und der Mehrzahl von Anbietern (802) von Modellen für maschinelles Lernen über eine Netzwerk-Repository-Funktion, NRF, (1302) des Mobilkommunikationsnetzwerks, erkennbar ist,
wobei die Anforderung mindestens eine ist von (i) einer Anforderung zum Erhalten des gewünschten Modells für maschinelles Lernen zur Verwendung an dem Verbraucher (902) von Modellen für maschinelles Lernen, (ii) einer Anforderung zum Abonnieren des Erhalts des gewünschten Modells für maschinelles Lernen zur Verwendung am Verbraucher (902) von Modellen für maschinelles Lernen und (iii) einer Anforderung zum Erhalten von Zugriffsinformationen für einen Anbieter (802) von Modellen für maschinelles Lernen, der ein Modell für maschinelles Lernen bereitstellt, das mit dem gewünschten Modell für maschinelles Lernen übereinstimmt.

11. Computerprogrammprodukt (404, 414, 424), umfassend Programmcodeabschnitte zum Durchführen des Verfahrens nach einem der Ansprüche 1 bis 10, wenn das Computerprogrammprodukt auf einer oder mehreren Computervorrichtungen (402, 412, 422) ausgeführt wird.

12. Computereinheit (400), die so konfiguriert ist, dass sie Broker-Komponente (804) zum Ermöglichen der Verwendung von Modellen für maschinelles Lernen in einem Mobilkommunikationssystem ausführt, das eine Mehrzahl von Anbietern (802) von Modellen für maschinelles Lernen umfasst, wobei mindestens einer der Mehrzahl von Anbietern (802) von Modellen für maschinelles Lernen eine Netzwerkdatenanalysefunktion, NWDAF, des Mobilkommunikationsnetzwerks ist, wobei die Broker-Komponente (804) von mindestens einem von einem Verbraucher (902) von Modellen für maschinelles Lernen und der Mehrzahl von Anbietern (802) von Modellen für maschinelles Lernen über eine Netzwerk-Repository-Funktion, NRF, (1302) des Mobilkommunikationssystems erkennbar ist und ein Anbieterregister führt, das Informationen über die Mehrzahl von Anbietern (802) von Modellen für maschinelles Lernen und Modelle für maschinelles Lernen umfasst, die von der Mehrzahl von Anbietern (802) von Modellen für maschinelles Lernen bereitgestellt werden, wobei die Computereinheit (400) mindestens einen Prozessor (402) und mindestens einen Speicher (404) umfasst, wobei der mindestens eine Speicher (404) Anweisungen enthält, die von dem mindestens einen Prozessor (402) ausgeführt werden können, sodass die Broker-Komponente (804) zum Durchführen des Verfahrens nach einem der Ansprüche 1 bis 8 ausgelegt ist.

13. Computereinheit (410), die so konfiguriert ist, dass sie einen Verbraucher (902) von Modellen für maschinelles Lernen zum Ermöglichen der Verwendung von Modellen für maschinelles Lernen in einem Mobilkommunikationssystem ausführt, das eine Mehrzahl von Anbietern (802) von Modellen für maschinelles Lernen umfasst, wobei mindestens einer der Mehrzahl von Anbietern (802) von Modellen für maschinelles Lernen eine Netzwerkdatenanalysefunktion, NWDAF, des Mobilkommunikationsnetzwerks ist, wobei die Computereinheit (410) mindestens einen Prozessor (412) und mindestens einen Speicher (414) umfasst, wobei der mindestens eine Speicher (414) Anweisungen enthält, die von dem mindestens einen Prozessor (412) ausgeführt werden können, sodass der Verbraucher (902) von Modellen für maschinelles Lernen zum Durchführen des Verfahrens nach Anspruch 9 ausgelegt ist.

14. Computereinheit (420), die so konfiguriert ist, dass sie einen Anbieter (802) von Modellen für maschinelles Lernen zum Ermöglichen der Verwendung von Modellen für maschinelles Lernen in einem Mobilkommunikationssystem ausführt, das eine Mehrzahl von Anbietern (802) von Modellen für maschinelles Lernen umfasst, wobei der Anbieter (802) von Modellen für maschinelles Lernen einer der Mehrzahl von Anbietern (802) von Modellen für maschinelles Lernen und eine Netzwerkdatenanalysefunktion, NWDAF, des Mobilkommunikationsnetzwerks ist, wobei die Computereinheit (420) mindestens einen Prozessor (422) und mindestens einen Speicher (424) umfasst, wobei der mindestens eine Speicher (424) Anweisungen enthält, die von dem mindestens einen Prozessor (422) ausgeführt werden können, sodass der Anbieter (802) von Modellen für maschinelles Lernen zum Durchführen des Verfahrens nach Anspruch 10 ausgelegt ist.

## Revendications

1. Procédé pour faciliter l'utilisation de modèles d'apprentissage automatique dans un système de communication mobile comprenant une pluralité de fournisseurs de modèles d'apprentissage automatique (802), au moins l'un de la pluralité de fournisseurs de modèles d'apprentissage automatique (802) étant une fonction d'analyse de données de réseau, NWDAF, du système de communication mobile, le procédé étant réalisé par un composant courtier (804) maintenant un registre de fournisseurs contenant des informations relatives à la pluralité de fournisseurs de modèles d'apprentissage automatique (802) et aux modèles d'apprentissage automatique fournis par la pluralité de fournisseurs de modèles d'apprentissage automatique (802), le composant courtier (804) pouvant être découvert par au moins l'un parmi un consommateur de modèles d'apprentissage automatique (902) et la pluralité de fournisseurs de modèles d'apprentissage automatique (802) via une fonction de référentiel de réseau, NRF, (1302) du système de communication mobile, le procédé comprenant :
la réception (S502) d'une demande pour un modèle d'apprentissage automatique souhaité depuis le consommateur de modèles d'apprentissage automatique (902) ;
la détermination (S504), sur la base des informations contenues dans le registre de fournisseurs, d'un modèle d'apprentissage automatique parmi les modèles d'apprentissage automatique fournis par les fournisseurs de modèles d'apprentissage automatique (802) qui correspond au modèle d'apprentissage automatique souhaité ; et
l'envoi (S506) d'une réponse au consommateur de modèles d'apprentissage automatique (902) fournissant des informations associées au modèle d'apprentissage automatique déterminé,
dans lequel la demande est au moins l'une parmi (i) une demande pour obtenir le modèle d'apprentissage automatique souhaité pour son utilisation au niveau du consommateur de modèles d'apprentissage automatique (902), (ii) une demande pour s'abonner pour obtenir le modèle d'apprentissage automatique souhaité pour son utilisation au niveau du consommateur de modèles d'apprentissage automatique (902), et (iii) une demande pour obtenir des informations d'accès à un fournisseur de modèles d'apprentissage automatique (802) fournissant un modèle d'apprentissage automatique qui correspond au modèle d'apprentissage automatique souhaité.

2. Procédé selon la revendication 1, dans lequel la demande comprend des informations caractérisant le modèle d'apprentissage automatique souhaité et dans lequel la détermination du modèle d'apprentissage automatique qui correspond au modèle d'apprentissage automatique souhaité comprend la mise en correspondance des informations caractérisant le modèle d'apprentissage automatique souhaité avec les informations contenues dans le registre de fournisseurs, dans lequel, facultativement, les informations caractérisant le modèle d'apprentissage automatique souhaité comprennent au moins l'un parmi :
un paramètre de sortie attendu fourni par le modèle d'apprentissage automatique souhaité,
un ou plusieurs paramètres d'entrée attendus exigés par le modèle d'apprentissage automatique souhaité,
un type attendu du modèle d'apprentissage automatique souhaité, et
une ou plusieurs conditions basées sur des métriques d'évaluation indicatives de caractéristiques de sortie censées être prises en charge par le modèle d'apprentissage automatique souhaité.

3. Procédé selon la revendication 1 ou 2, dans lequel :
- les informations contenues dans le registre de fournisseurs comprennent, pour chaque modèle d'apprentissage automatique fourni par l'un de la pluralité de fournisseurs de modèles d'apprentissage automatique (802), au moins l'un parmi :
un paramètre de sortie fourni par le modèle d'apprentissage automatique respectif,
un ou plusieurs paramètres d'entrée exigés par le modèle d'apprentissage automatique respectif,
un type du modèle d'apprentissage automatique respectif, et
une ou plusieurs valeurs de métriques d'évaluation indicatives de caractéristiques de sortie prises en charge par le modèle d'apprentissage automatique respectif ; et/ou
- les informations contenues dans le registre de fournisseurs comprennent des informations d'accès pour chacun de la pluralité de fournisseurs de modèles d'apprentissage automatique (802).

4. Procédé selon l'une quelconque des revendications 1 à 3, comprenant en outre :
la réception, avant la réception (S502) de la demande pour le modèle d'apprentissage automatique souhaité, d'un message d'enregistrement depuis chacun de la pluralité de fournisseurs de modèles d'apprentissage automatique (802) pour enregistrer ses modèles d'apprentissage automatique dans le registre de fournisseurs.

5. Procédé selon l'une quelconque des revendications 1 à 4, dans lequel, lorsque la demande est une demande pour obtenir le modèle d'apprentissage automatique souhaité pour son utilisation au niveau du consommateur de modèles d'apprentissage automatique (902) :
- les informations associées au modèle d'apprentissage automatique déterminé fourni dans la réponse au consommateur de modèles d'apprentissage automatique (902) comprennent le modèle d'apprentissage automatique déterminé ; et/ou
- le procédé comprend en outre :
l'envoi d'une demande pour le modèle d'apprentissage automatique déterminé au fournisseur de modèles d'apprentissage automatique (802) fournissant le modèle d'apprentissage automatique déterminé ; et
la réception du modèle d'apprentissage automatique déterminé depuis le fournisseur de modèles d'apprentissage automatique (802) fournissant le modèle d'apprentissage automatique déterminé en réponse à la demande.

6. Procédé selon l'une quelconque des revendications 1 à 5, dans lequel, lorsque la demande est une demande pour s'abonner pour obtenir le modèle d'apprentissage automatique souhaité pour son utilisation au niveau du consommateur de modèles d'apprentissage automatique (902), les informations associées au modèle d'apprentissage automatique déterminé fourni dans la réponse au consommateur de modèles d'apprentissage automatique (902) comprennent une notification en ce qui concerne la disponibilité du modèle d'apprentissage automatique déterminé et, facultativement, le modèle d'apprentissage automatique déterminé, dans lequel, facultativement, la réponse comprenant la notification est envoyée au consommateur de modèles d'apprentissage automatique (902) conditionnellement lorsque le modèle d'apprentissage automatique déterminé correspond au modèle d'apprentissage automatique souhaité mieux qu'un modèle d'apprentissage automatique précédemment envoyé au consommateur de modèles d'apprentissage automatique (902) comme correspondant au modèle d'apprentissage automatique souhaité.

7. Procédé selon l'une quelconque des revendications 1 à 6, dans lequel, lorsque la demande est une demande de s'abonner pour obtenir le modèle d'apprentissage automatique souhaité pour son utilisation au niveau du consommateur de modèles d'apprentissage automatique (902), le procédé comprend en outre :
la réception, lors de la réception de la demande pour le modèle d'apprentissage automatique souhaité, d'un message d'enregistrement depuis un fournisseur de modèles d'apprentissage automatique (802) pour enregistrer ses modèles d'apprentissage automatique dans le registre de fournisseurs, dans lequel la détermination (S504) du modèle d'apprentissage automatique qui correspond au modèle d'apprentissage automatique souhaité comprend la recherche d'une correspondance des modèles d'apprentissage automatique enregistrés par le message d'enregistrement avec le modèle d'apprentissage automatique souhaité ;
si une correspondance avec le modèle d'apprentissage automatique souhaité est déterminée, l'envoi d'une demande pour le modèle d'apprentissage automatique déterminé au fournisseur de modèles d'apprentissage automatique (802) fournissant le modèle d'apprentissage automatique déterminé ; et
la réception du modèle d'apprentissage automatique déterminé depuis le fournisseur de modèles d'apprentissage automatique (802) fournissant le modèle d'apprentissage automatique déterminé en réponse à la demande.

8. Procédé selon l'une quelconque des revendications 1 à 7, dans lequel, lorsque la demande est une demande pour obtenir des informations d'accès à un fournisseur de modèles d'apprentissage automatique (802) fournissant un modèle d'apprentissage automatique qui correspond au modèle d'apprentissage automatique souhaité, les informations associées au modèle d'apprentissage automatique déterminé fourni dans la réponse au consommateur de modèles d'apprentissage automatique (902) comprennent des informations d'accès au fournisseur de modèles d'apprentissage automatique (802) fournissant le modèle d'apprentissage automatique déterminé.

9. Procédé pour faciliter l'utilisation de modèles d'apprentissage automatique dans un système de communication mobile comprenant une pluralité de fournisseurs de modèles d'apprentissage automatique (802), au moins l'un de la pluralité de fournisseurs de modèles d'apprentissage automatique (802) étant une fonction d'analyse de données de réseau, NWDAF, du système de communication mobile, le procédé étant réalisé par un consommateur de modèles d'apprentissage automatique (902) et comprenant :
l'envoi (S602) d'une demande pour un modèle d'apprentissage automatique souhaité à un composant courtier (804) maintenant un registre de fournisseurs comprenant des informations relatives à la pluralité de fournisseurs de modèles d'apprentissage automatique (802) et aux modèles d'apprentissage automatique fournis par la pluralité de fournisseurs de modèles d'apprentissage automatique (802), le composant courtier (804) pouvant être découvert par au moins l'un parmi le consommateur de modèles d'apprentissage automatique (902) et la pluralité de fournisseurs de modèles d'apprentissage automatique (802) via une fonction de référentiel de réseau, NRF, (1302) du système de communication mobile ; et
la réception (S604) d'une réponse depuis le composant courtier (804) fournissant des informations associées au modèle d'apprentissage automatique déterminé par le composant courtier (804) parmi les modèles d'apprentissage automatique fournis par les fournisseurs de modèles d'apprentissage automatique (802) comme correspondant au modèle d'apprentissage automatique souhaité,
dans lequel la demande est au moins l'une parmi (i) une demande pour obtenir le modèle d'apprentissage automatique souhaité pour son utilisation au niveau du consommateur de modèles d'apprentissage automatique (902), (ii) une demande pour s'abonner pour obtenir le modèle d'apprentissage automatique souhaité pour son utilisation au niveau du consommateur de modèles d'apprentissage automatique (902), et (iii) une demande pour obtenir des informations d'accès à un fournisseur de modèles d'apprentissage automatique (802) fournissant un modèle d'apprentissage automatique qui correspond au modèle d'apprentissage automatique souhaité.

10. Procédé pour faciliter l'utilisation de modèles d'apprentissage automatique dans un système de communication mobile comprenant une pluralité de fournisseurs de modèles d'apprentissage automatique (802), le procédé étant réalisé par un fournisseur de modèles d'apprentissage automatique (802) de la pluralité de fournisseurs de modèles d'apprentissage automatique (802) qui est une fonction d'analyse de données de réseau, NWDAF, du système de communication mobile, et comprenant :
l'envoi (S702), à un composant courtier (804) maintenant un registre de fournisseurs comprenant des informations relatives à la pluralité de fournisseurs de modèles d'apprentissage automatique (802) et aux modèles d'apprentissage automatique fournis par la pluralité de fournisseurs de modèles d'apprentissage automatique (802), le registre de fournisseurs permettant au composant courtier (804) de déterminer un modèle d'apprentissage automatique parmi les modèles d'apprentissage automatique fournis par la pluralité de fournisseurs de modèles d'apprentissage automatique (802) qui correspond à un modèle d'apprentissage automatique souhaité demandé par une demande d'un consommateur de modèles d'apprentissage automatique (902), d'un message d'enregistrement pour enregistrer des modèles d'apprentissage automatique fournis par le fournisseur de modèles d'apprentissage automatique (802) dans le registre de fournisseurs du composant courtier (804), le composant courtier (804) pouvant être découvert par au moins l'un parmi le consommateur de modèles d'apprentissage automatique (902) et la pluralité de fournisseurs de modèles d'apprentissage automatique (802) via une fonction de référentiel de réseau, NRF, (1302) du système de communication mobile,
dans lequel la demande est au moins l'une parmi (i) une demande pour obtenir le modèle d'apprentissage automatique souhaité pour son utilisation au niveau du consommateur de modèles d'apprentissage automatique (902), (ii) une demande pour s'abonner pour obtenir le modèle d'apprentissage automatique souhaité pour son utilisation au niveau du consommateur de modèles d'apprentissage automatique (902), et (iii) une demande pour obtenir des informations d'accès à un fournisseur de modèles d'apprentissage automatique (802) fournissant un modèle d'apprentissage automatique qui correspond au modèle d'apprentissage automatique souhaité.

11. Produit programme informatique (404, 414, 424) comprenant des parties de code de programme pour réaliser le procédé selon l'une quelconque des revendications 1 à 10 lorsque le produit programme informatique est exécuté sur un ou plusieurs dispositifs informatiques (402, 412, 422).

12. Unité informatique (400) configurée pour exécuter un composant courtier (804) pour faciliter l'utilisation de modèles d'apprentissage automatique dans un système de communication mobile comprenant une pluralité de fournisseurs de modèles d'apprentissage automatique (802), au moins l'un de la pluralité de fournisseurs de modèles d'apprentissage automatique (802) étant une fonction d'analyse de données de réseau, NWDAF, du système de communication mobile, le composant courtier (804) pouvant être découvert par au moins l'un parmi un consommateur de modèles d'apprentissage automatique (902) et la pluralité de fournisseurs de modèles d'apprentissage automatique (802) via une fonction de référentiel de réseau, NRF, (1302) du système de communication mobile et maintenant un registre de fournisseurs comprenant des informations relatives à la pluralité de fournisseurs de modèles d'apprentissage automatique (802) et aux modèles d'apprentissage automatique fournis par la pluralité de fournisseurs de modèles d'apprentissage automatique (802), l'unité informatique (400) comprenant au moins un processeur (402) et au moins une mémoire (404), l'au moins une mémoire (404) contenant des instructions exécutables par l'au moins un processeur (402) de sorte que le composant courtier (804) soit exploitable pour réaliser le procédé selon l'une quelconque des revendications 1 à 8.

13. Unité informatique (410) configurée pour exécuter un consommateur de modèles d'apprentissage automatique (902) pour faciliter l'utilisation de modèles d'apprentissage automatique dans un système de communication mobile comprenant une pluralité de fournisseurs de modèles d'apprentissage automatique (802), au moins l'un de la pluralité de fournisseurs de modèles d'apprentissage automatique (802) étant une fonction d'analyse de données de réseau, NWDAF, du système de communication mobile, l'unité informatique (410) comprenant au moins un processeur (412) et au moins une mémoire (414), l'au moins une mémoire (414) contenant des instructions exécutables par l'au moins un processeur (412) de sorte que le consommateur de modèles d'apprentissage automatique (902) soit exploitable pour réaliser le procédé selon la revendication 9.

14. Unité informatique (420) configurée pour exécuter un fournisseur de modèles d'apprentissage automatique (802) pour faciliter l'utilisation de modèles d'apprentissage automatique dans un système de communication mobile comprenant une pluralité de fournisseurs de modèles d'apprentissage automatique (802), le fournisseur de modèles d'apprentissage automatique (802) étant l'un de la pluralité de fournisseurs de modèles d'apprentissage automatique (802) et étant une fonction d'analyse de données de réseau, NWDAF, du système de communication mobile, l'unité informatique (420) comprenant au moins un processeur (422) et au moins une mémoire (424), l'au moins une mémoire (424) contenant des instructions exécutables par l'au moins un processeur (422) de sorte que le fournisseur de modèles d'apprentissage automatique (802) soit exploitable pour réaliser le procédé selon la revendication 10.
